# FASCICULE DE BREVET EUROPEEN

(11) **EP 4 253 786 B1**
(45) Date de publication et mention de la délivrance du brevet: **30.07.2025**
(21) Numéro de dépôt: 23164466.7
(22) Date de dépôt: 27.03.2023
(51) Int. Cl.: F16D 55/38, F16D 59/02

(54) **DISPOSITIF DE FREINAGE ÉLECTROMAGNÉTIQUE CONFIGURÉ POUR BLOQUER UN ARBRE ROTATIF ET SYSTÈME DE MOBILITÉ COMPORTANT LE DISPOSITIF ET L'ARBRE ROTATIF**
ELEKTROMAGNETISCHE BREMSVORRICHTUNG, KONFIGURIERT ZUM BLOCKIEREN EINER ROTIERENDEN WELLE, UND MOBILITÄTSSYSTEM, DAS DIE VORRICHTUNG UND DIE DREHWELLE BESTEHT
ELECTROMAGNETIC BRAKING DEVICE CONFIGURED TO BLOCK A ROTATING SHAFT AND MOBILITY SYSTEM COMPRISING THE DEVICE AND THE ROTARY SHAFT

(30) Priorité: 28.03.2022 FR 2202770; 28.11.2022 FR 2212399
(43) Date de publication de la demande: 04.10.2023
(73) Titulaire: Warner Electric Europe SAS, 49124 St-Barthélémy d'Anjou (FR)
(72) Inventeur: VOLANT, Eric, 49190 Denée (FR); FARRUGIA, Anaïs, 49100 Angers (FR); ROUSSEAU, Kévin, 49125 Briollay (FR); GANDON, Eric, 49460 Montreuil-Juigné (FR)
(74) Mandataire: Santarelli

(56) Documents cités:
- WO-A1-2019/081820

## Description

### Domaine technique de l'invention

La présente invention concerne un dispositif de freinage électromagnétique configuré pour bloquer un arbre rotatif.

De tels dispositifs de freinage sont par exemple mis en œuvre pour bloquer un arbre rotatif d'un ascenseur, d'un chariot élévateur, et plus généralement dans tout type de système nécessitant des arrêts prolongés sécurisés.

L'invention concerne également un système de mobilité, du type ascenseur ou chariot élévateur, comportant un tel dispositif monté sur un tel arbre rotatif.

### Etat de la technique

On connaît des systèmes de mobilité, du type ascenseur ou chariot élévateur, qui sont pourvus d'un arbre rotatif qui doit pouvoir être serré et bloqué en rotation pendant une période déterminée, en particulier lors d'arrêts prolongés sécurisés.

Pour ce faire, ces systèmes sont pourvus aussi d'un dispositif de freinage électromagnétique, ou frein électromagnétique, qui comporte un corps, un disque de friction monté mobile en translation et en rotation, le disque de friction étant configuré pour être solidaire de l'arbre rotatif, et une armature mobile dans une première direction sous l'action d'une force électromagnétique générée par une bobine électrique logée dans le corps et dans une deuxième direction sous l'action d'une force exercée par un ou plusieurs ressorts de compression aussi partiellement logés dans le corps.

Souvent, l'armature est formée d'un bloc métallique massif et magnétisable qui est sollicité directement par les ressorts.

On connaît aussi, par exemple du document japonais JPS5261681, une armature dont le bloc métallique est entièrement laminé de sorte à former un bloc d'une pluralité de feuilles métalliques adjacentes les unes aux autres.

On connaît également du document japonais JPH08247181 une armature dont le bloc métallique comporte une portion laminée formée d'une pluralité de feuilles métalliques adjacentes les unes aux autres et soudées entre elles, et une portion massive à laquelle est soudée la portion laminée.

Le document WO 2019/081820 A1 peut-être de même cité comme art antérieur.

### Exposé de l'invention

L'invention vise à fournir un dispositif de freinage électromagnétique d'un genre similaire, qui soit particulièrement simple et performant.

L'invention a ainsi pour objet, sous un premier aspect, un dispositif de freinage électromagnétique configuré pour bloquer un arbre rotatif, comportant un disque de friction monté mobile en translation et en rotation et configuré pour être solidaire de l'arbre rotatif, une partie externe et une partie intermédiaire montée mobile en translation entre le disque de friction et la partie externe, au moins l'une de la partie externe ou de la partie intermédiaire étant magnétique, au moins un organe d'actionnement électromagnétique et au moins un organe d'actionnement mécanique qui sont logés dans l'autre de la partie externe ou de la partie intermédiaire, la partie intermédiaire étant configurée pour se déplacer dans une première direction dite de freinage vers le disque de friction lorsqu'elle est sous l'action de l'au moins un organe d'actionnement mécanique, et dans une deuxième direction opposée à la première direction vers la partie externe lorsque la partie intermédiaire est sous l'action de l'au moins un organe d'actionnement électromagnétique ; le dispositif de freinage électromagnétique étant caractérisé en ce qu'il comporte en outre une pluralité de feuilles magnétiques indépendantes les unes des autres, mobiles en translation entre la partie intermédiaire et la partie externe lorsqu'elles sont sous l'action de l'au moins un organe d'actionnement mécanique et/ou sous l'action de l'au moins un organe d'actionnement électromagnétique.

Dans le dispositif selon l'invention, la partie externe est fixe et la partie intermédiaire ainsi que les feuilles magnétiques sont au moins partiellement mobiles en translation par rapport à la partie externe.

Selon un premier mode de réalisation, la partie externe est formée par un corps magnétique et la partie intermédiaire est formée par une armature magnétique.

Selon un deuxième mode de réalisation, la partie externe est formée par une armature magnétique et la partie intermédiaire est formée par un corps magnétique.

On notera que le corps, l'armature et les feuilles peuvent être réalisées en un matériau métallique, ou composite.

Dans chacun de ces modes de réalisation, l'au moins un organe d'actionnement électromagnétique et l'au moins un organe d'actionnement mécanique sont logés dans le corps et les feuilles magnétiques sont situées contre l'armature sous l'action de l'au moins un organe d'actionnement mécanique.

Ainsi, le dispositif est configuré pour que, dans une configuration de freinage, les feuilles métalliques magnétiques sont poussées par l'au moins un organe d'actionnement mécanique depuis la partie externe, respectivement la partie intermédiaire, vers la partie intermédiaire, respectivement la partie externe, et dans une configuration de défreinage, les feuilles métalliques magnétiques sont au moins partiellement déplacées sous l'action de l'au moins un organe d'actionnement électromagnétique depuis la partie intermédiaire, respectivement la partie externe, vers la partie externe, respectivement la partie intermédiaire, à l'encontre de l'au moins un organe d'actionnement mécanique, jusqu'à venir contre la partie externe ou la partie intermédiaire, avec les feuilles métalliques magnétiques qui se déforment successivement sous l'action simultanée de l'au moins un organe d'actionnement mécanique.

Le cas échéant, les feuilles métalliques magnétiques peuvent être déplacées à l'encontre de l'au moins un organe d'actionnement mécanique, jusqu'à venir contre la partie externe ou la partie intermédiaire.

Lorsqu'elles ne sont ni sous l'action de l'au moins un organe d'actionnement mécanique, ni sous l'action de l'au moins un organe d'actionnement électromagnétique, les feuilles magnétiques sont globalement planes.

On notera que dans le premier mode de réalisation, le dispositif de freinage électromagnétique est configuré pour que, dans la configuration de freinage, les feuilles sont poussées par l'au moins un organe d'actionnement mécanique depuis une face interne du corps et accompagnent le déplacement de l'armature dans la première direction vers le disque de friction et, dans la configuration de défreinage, les feuilles sont déplacées sous l'action de l'au moins un organe d'actionnement électromagnétique dans la deuxième direction et sont accompagnées en déplacement par l'armature, à l'encontre de l'au moins un organe d'actionnement mécanique, jusqu'à venir contre la face interne du corps, avec les feuilles qui se déforment successivement sous l'action de l'au moins un organe d'actionnement mécanique.

En particulier, lors du passage de la configuration de freinage à la configuration de défreinage, la ou les parties des feuilles qui se trouvent dans la zone d'application de l'effort exercé par l'au moins un organe d'actionnement mécanique se déplacent plus lentement que le reste de la surface des feuilles, et le reste de la surface des feuilles se déforme et vient plus rapidement en butée contre la face interne du corps. C'est l'armature, sollicitée magnétiquement par l'organe d'actionnement électromagnétique, qui de par sa structure massive, vient remettre les feuilles en forme lorsqu'elle se déplace à l'encontre de l'au moins un organe d'actionnement mécanique.

Lors du passage de la configuration de défreinage à la configuration de freinage, la ou les parties des feuilles qui se trouvent dans la zone d'application de l'effort exercé par l'au moins un organe d'actionnement mécanique se déplacent simultanément avec l'armature et plus rapidement, dans la première direction, depuis la face interne du corps, que le reste de la surface des feuilles, tandis que le reste de la surface des feuilles se déforme et s'éloigne plus lentement de la face interne du corps. On constate que l'armature n'est plus sollicitée magnétiquement et qu'elle se déplace plus rapidement, poussée par les feuilles elles-mêmes poussées par l'au moins un organe d'actionnement mécanique, jusqu'à venir au contact du disque de friction.

On notera également que dans le deuxième mode de réalisation, le dispositif de freinage électromagnétique est configuré pour que, dans la configuration de freinage, les feuilles métalliques magnétiques sont poussées par l'au moins un organe d'actionnement mécanique contre l'armature et l'au moins un organe d'actionnement mécanique prend appui sur l'ensemble formé des feuilles et de l'armature pour accompagner en déplacement le corps dans la première direction vers le disque de friction et, dans une configuration de défreinage, le corps est déplacé sous l'action de l'au moins un organe d'actionnement électromagnétique dans la deuxième direction, à l'encontre de l'au moins un organe d'actionnement mécanique, jusqu'à venir contre les feuilles et les compresser contre l'armature.

En particulier, lors du passage de la configuration de freinage à la configuration de défreinage, la ou les parties des feuilles qui se trouvent dans la zone d'application de l'effort exercé par l'au moins un organe d'actionnement mécanique restent plaquées ou presque contre l'armature, et le reste de la surface des feuilles, sollicité magnétiquement par l'organe d'actionnement électromagnétique, peut se déformer. C'est le corps, déplacé sous l'effet de l'organe d'actionnement électromagnétique, c'est-à-dire attiré vers l'armature et aussi vers les feuilles, qui vient remettre les feuilles en forme, ou annuler la déformation qu'elles subissent, lorsqu'elles sont compressées entre le corps et l'armature, notamment du fait de la structure massive de cette dernière.

Lors du passage de la configuration de défreinage à la configuration de freinage, on constate que l'armature n'est plus sollicitée magnétiquement et qu'elle permet un déplacement plus rapide du corps, poussé par l'au moins un organe d'actionnement mécanique, jusqu'à venir au contact du disque de friction.

C'est donc plus généralement la présence de l'au moins un organe d'actionnement mécanique, capable de solliciter mécaniquement l'ensemble formé de l'armature et la totalité des feuilles qui génère la déformation successive de ces feuilles. En particulier, la déformation des feuilles résulte de l'effort de l'au moins un organe d'actionnement mécanique combiné à la force magnétique générée par l'au moins un organe d'actionnement électromagnétique qui s'établit ou qui se dissipe.

Ceci permet notamment de réduire le bruit que peut générer le déplacement de l'armature, respectivement du corps, depuis le disque de friction vers le corps, respectivement l'armature.

Le temps de passage de la configuration de freinage à la configuration de défreinage peut être légèrement allongé car l'armature n'est magnétisée que plus tardivement, mais ceci n'a pas d'influence néfaste sur le fonctionnement du dispositif de freinage électromagnétique.

Globalement, dans chacun des modes de réalisation, le temps de passage de la configuration de défreinage à la configuration de freinage est ainsi réduit, ce qui est particulièrement sécuritaire.

Ceci permet aussi de réduire le bruit que peut générer le déplacement de l'armature, respectivement du corps, depuis la face interne du corps, respectivement l'armature, vers le disque de friction.

Des caractéristiques préférées particulièrement simples, commodes et économiques du dispositif selon l'invention sont présentées ci-dessous.

L'au moins un organe d'actionnement électromagnétique et l'au moins un organe d'actionnement mécanique peuvent être logés fixes dans la partie intermédiaire ou dans la partie externe.

L'au moins un organe d'actionnement mécanique peut être configuré pour solliciter des zones périphériques externes et/ou internes des feuilles magnétiques, tandis que l'organe d'actionnement électromagnétique peut être configuré pour générer un flux magnétique circulant dans les feuilles magnétiques.

Le rapport entre une épaisseur de la partie intermédiaire, respectivement de la partie externe, et une épaisseur des feuilles magnétiques en appui les unes contre les autres peut être compris entre environ 0,2 et environ 30, voire entre environ 0,2 et 5.

Le dispositif de freinage électromagnétique peut comporter entre environ 2 et environ 30 feuilles magnétiques.

Chaque feuille magnétique peut présenter une épaisseur comprise entre 0,3 mm et environ 5 mm et/ou chaque feuille peut présenter sensiblement la même épaisseur.

La partie externe ou la partie intermédiaire peut présenter une face interne et peut comporter au moins un trou borgne débouchant sur ladite face interne, l'au moins un organe d'actionnement mécanique étant un ressort de compression partiellement logé dans ledit trou borgne et s'étendant en saillie depuis ladite face interne jusqu'à venir en contact avec une des feuilles qui se trouve directement en regard de ladite face interne.

Le dispositif de freinage électromagnétique peut comporter une pluralité de ressorts de compression répartis, notamment régulièrement, le long d'un bord périphérique externe et/ou d'un bord périphérique interne de ladite face interne.

La partie externe ou la partie intermédiaire peut présenter une face interne et peut comporter un logement ménagé dans la face interne, l'organe d'actionnement électromagnétique comportant une bobine électrique logée dans ledit logement et configurée pour générer un flux magnétique circulant dans lesdites feuilles métalliques magnétiques et dans ladite partie externe et dans ladite partie intermédiaire lorsque ladite bobine électrique est alimentée en courant électrique.

La partie externe peut être configurée pour être assujettie mécaniquement à un support, le disque de friction étant situé axialement entre la partie intermédiaire et ledit support.

Le dispositif de freinage électromagnétique peut comporter au moins un organe d'assemblage présentant une première extrémité assujettie mécaniquement à ladite partie externe et une deuxième extrémité, opposée à ladite première extrémité, assujettie mécaniquement sur ledit support de sorte que ledit disque de friction, ladite partie intermédiaire et lesdites feuilles sont situés entre ladite partie externe et ledit support.

Le dispositif de freinage électromagnétique peut comporter au moins un organe de liaison présentant une portion principale dont une première extrémité est configurée pour venir en appui contre ledit support et une deuxième extrémité, opposée à la première extrémité, configurée pour venir en appui contre ladite partie externe, l'au moins un organe de liaison comportant un orifice traversant configuré pour être traversé par ledit organe d'assemblage.

Le dispositif de freinage électromagnétique peut comporter plusieurs organes de liaison répartis, notamment régulièrement, le long d'un bord périphérique externe de ladite partie externe.

Le dispositif peut comporter au moins un organe de liaison configuré pour maintenir une distance prédéterminée entre la partie externe et un support destiné à enserrer, avec la partie intermédiaire, le disque de friction. Chaque feuille peut comporter une portion principale, une portion d'appui et une portion de raccord rattachant la portion d'appui à la portion principale, l'organe de liaison étant en appui contre la portion d'appui d'une des feuilles, de sorte que les portions d'appui de toutes les feuilles sont en appui les unes contre les autres et forment par exemple un bloc, avec les portions d'appui des feuilles, et donc le bloc, qui sont interposées et maintenues en contact entre l'organe de liaison et la partie externe, chaque portion de raccord étant configurée pour se déformer lorsque la portion principale de la feuille associée se déforme sous l'action de l'au moins un organe d'actionnement mécanique et/ou sous l'action de l'au moins un organe d'actionnement électromagnétique.

Chaque feuille peut comporter des portions d'appui distinctes et à distance les unes des autres, chaque portion d'appui étant ménagée en saillie externe de la portion principale ou dans la portion principale, et l'au moins un organe de liaison est formé par une entretoise.

Chaque feuille peut comporter un organe d'appui s'étendant autour de la portion principale de la feuille associée et formant la portion d'appui, le support comportant un rebord d'appui formant l'organe de liaison.

La partie externe peut comporter au moins un trou traversant présentant une première extrémité débouchant sur une face tournée vers ladite partie intermédiaire, l'au moins un trou traversant étant élargi du côté de sa première extrémité et l'au moins un organe de liaison comportant une portion d'extrémité amincie configurée pour être reçue dans l'au moins un trou traversant du côté de sa première extrémité.

L'invention a aussi pour objet, sous un deuxième aspect, un système de mobilité, par exemple du type ascenseur ou chariot élévateur, comportant un dispositif de freinage électromagnétique tel que décrit ci-dessus et un arbre rotatif qui est solidaire d'un disque de friction du dispositif de freinage électromagnétique, avec l'arbre rotatif qui est bloqué en rotation lorsque la partie intermédiaire a été déplacée dans la première direction dite de freinage et qu'elle est en appui contre le disque de friction, et avec l'arbre rotatif qui est libre en rotation lorsque la partie intermédiaire a été déplacée dans la deuxième direction opposée à la première direction et qu'elle est éloignée du disque de friction.

### Brève description des figures

On va maintenant poursuivre l'exposé de l'invention par la description d'un exemple de réalisation, donnée ci-après à titre illustratif et non limitatif, en référence aux dessins visés ci-dessous.
La figure 1 représente schématiquement et partiellement un système de mobilité pourvu d'un ensemble comportant un arbre rotatif et un dispositif de freinage électromagnétique conforme à l'invention et monté autour de l'arbre rotatif.
La figure 2 est une vue partielle en perspective de l'ensemble que comporte le système de mobilité de la figure 1, dont notamment le dispositif de freinage électromagnétique selon un premier mode de réalisation et l'arbre rotatif.
La figure 3 est une vue similaire à celle de la figure 2, en vue de côté.
La figure 4 est une vue en perspective éclatée du dispositif de freinage électromagnétique pris de manière isolée.
La figure 5 est une vue similaire à celle de la figure 4, selon un autre angle de vue.
La figure 6 est une vue en coupe du dispositif de freinage électromagnétique repérée VI-VI sur la figure 3.
La figure 7 illustre un détail repéré D1 sur la figure 6.
La figure 8 est une vue en coupe partielle du dispositif de freinage électromagnétique, dans une configuration dite de freinage.
La figure 9 illustre un détail repéré D2 sur la figure 8.
La figure 10 est une vue similaire à celle de la figure 8, montrant le dispositif de freinage électromagnétique dans une configuration dite de défreinage.
La figure 11 illustre un détail repéré D3 sur la figure 10.
La figure 12 est une vue en coupe partielle du dispositif de freinage électromagnétique, passant de sa configuration dite de défreinage vers sa configuration dite de freinage et selon un premier angle de vue.
La figure 13 est une vue similaire à celle de la figure 4, montrant un dispositif de freinage électromagnétique selon un deuxième mode de réalisation.
La figure 14 est une vue en coupe du dispositif de freinage électromagnétique de la figure 13, dans sa configuration de freinage.
La figure 15 est une vue en perspective d'un dispositif de freinage électromagnétique selon un troisième mode de réalisation.
La figure 16 montre en perspective le dispositif de freinage électromagnétique de la figure 15 selon un autre angle de vue.
La figure 17 est une vue en perspective éclatée du dispositif de freinage électromagnétique des figures 15 et 16.
La figure 18 est une vue en perspective éclatée d'un dispositif de freinage électromagnétique selon un quatrième mode de réalisation.
La figure 19 est une vue en coupe partielle d'un dispositif de freinage électromagnétique selon un cinquième mode de réalisation, montrant ce dispositif dans une configuration de défreinage.
La figure 20 est une vue similaire à celle de la figure 19, montrant le dispositif dans une configuration de freinage.
La figure 21 est une vue en coupe partielle d'un dispositif de freinage électromagnétique selon un sixième mode de réalisation, montrant ce dispositif dans une configuration de défreinage.
La figure 22 est une vue similaire à celle de la figure 21, montrant le dispositif dans une configuration de freinage.

### Description détaillée

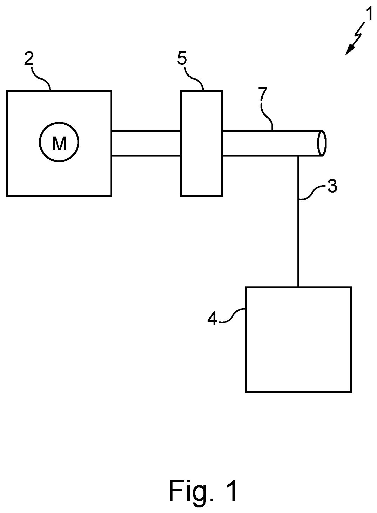

La figure 1 représente schématiquement un système de mobilité 1, par exemple ici du type ascenseur.

Ce système de mobilité 1 comporte une cabine d'ascenseur 4, un arbre rotatif 7 et un câble 3 raccordant la cabine d'ascenseur 4 à l'arbre rotatif 7.

Le système de mobilité 1 comporte également un moteur électrique 2 alimenté en courant électrique et configuré pour entraîner en rotation l'arbre rotatif 7.

Lorsque l'arbre rotatif 7 est entrainé en rotation par le moteur électrique 2, le câble 3 s'enroule ou se déroule, suivant le sens d'entraînement, autour de l'arbre rotatif 7 et la cabine d'ascenseur 4 est autorisée à monter ou à descendre.

Le système de mobilité 1 et en particulier la cabine d'ascenseur 4 peut nécessiter des arrêts prolongés sécurisés et comporte pour cela un dispositif de freinage électromagnétique 5.

Le dispositif de freinage électromagnétique 5 est monté sur l'arbre rotatif 7 et est configuré soit pour freiner, voire bloquer en rotation, l'arbre rotatif 7, soit pour le laisser libre.

Le dispositif de freinage électromagnétique 5 est alimenté électriquement et il peut s'agir de la même source d'alimentation en courant que le moteur électrique 2.

En particulier, le dispositif de freinage électromagnétique 5 peut être configuré pour freiner en rotation l'arbre rotatif 7 lorsqu'il n'est pas alimenté en courant, ce qui permet aussi de sécuriser le système de mobilité 1 par exemple en cas de défaut d'alimentation électrique.

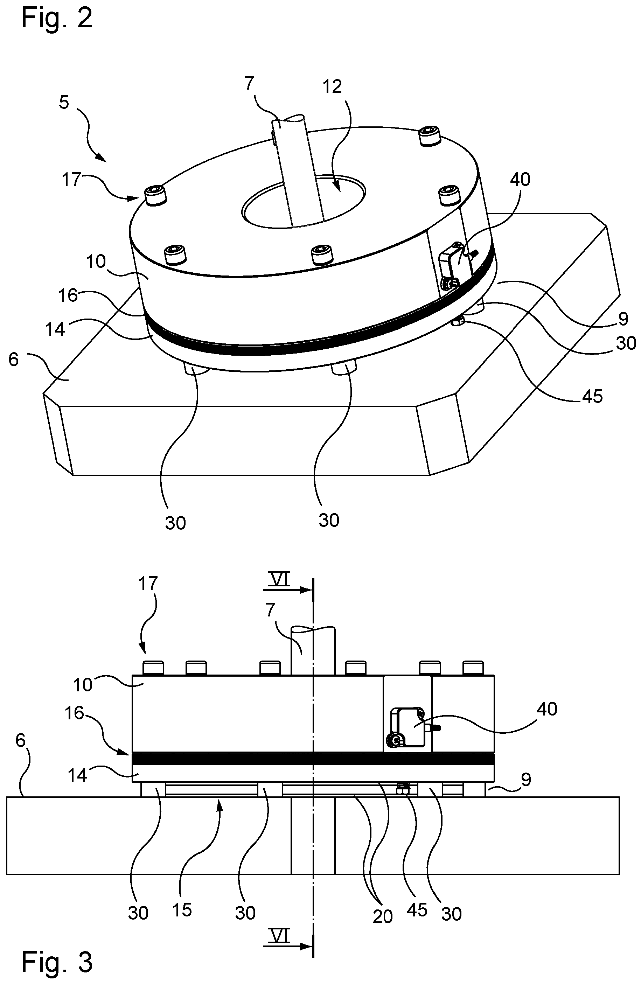

Le dispositif de freinage électromagnétique 5, conforme à un premier mode de réalisation, est mieux visible sur les figures 2 et 3.

Le dispositif de freinage électromagnétique 5 est assujetti mécaniquement sur un support 6, ici formé par un carter, par le biais par exemple de vis d'assemblage 17.

Le dispositif de freinage électromagnétique 5 a une ouverture centrale 12, ici de forme circulaire, qui définit un passage pour l'arbre rotatif 7.

Le dispositif de freinage électromagnétique 5 comporte un corps 10, aussi appelé coquille, ayant ici une forme globalement cylindrique et de section annulaire.

Le corps 10 est ici réalisé en un matériau métallique magnétique.

Le dispositif de freinage 5 comporte en outre une pluralité de feuilles 16 métalliques magnétiques, une armature 14 métallique magnétique et un disque de friction 15 qui sont interposés entre le corps 10 et le support 6.

Le dispositif de freinage 5 comporte en outre un organe de liaison formé par des entretoises 30 disposées entre le corps 10 et le support 6 pour définir un espace 9 entre ces éléments. Les entretoises 30 sont configurées pour maintenir une distance prédéterminée entre le corps 10 et le support 6.

Les feuilles 16 métalliques magnétiques, l'armature 14 métallique magnétique et le disque de friction 15 sont reçus dans cet espace 9 formé entre le corps 10 et le support 6.

En particulier, les feuilles 16 sont agencées entre le corps 10 et l'armature 14, l'armature 14 est agencée entre les feuilles 16 et le disque de friction 15, et le disque de friction 15 est agencé entre l'armature 14 et le support 6.

Dans ce premier mode de réalisation du dispositif de freinage électromagnétique 5, le corps 10 forme une partie externe tandis que l'armature 14 forme une partie intermédiaire.

Dans l'exemple illustré, les feuilles 16 et l'armature 14 sont montées mobiles en translation sur l'arbre rotatif 7 et par rapport au corps 10, dans l'espace 9. Le corps 10 est ici fixe par rapport au support 6. Le disque de friction 15 est quant à lui configuré pour être assujetti mécaniquement à l'arbre rotatif 7.

Le disque de friction 15 comporte une garniture 20 sur une face tournée vers l'armature 14 et une garniture 20 sur une face opposée du disque de friction 15 tournée vers le support 6. Chaque garniture 20 présente une section annulaire et est ménagée au moins en périphérie du disque de friction 15.

Le dispositif de freinage électromagnétique 5 est configuré de sorte que, lorsqu'il n'est pas alimenté électriquement, les feuilles 16 et l'armature 14 se déplacent dans une première direction dite de freinage vers le disque de friction 15 jusqu'à ce que l'armature 14 vienne en appui contre le disque de friction 15 pour le bloquer en rotation et ainsi interdire la rotation de l'arbre rotatif 7.

Au contraire, lorsque le dispositif de freinage électromagnétique 5 est alimenté électriquement, les feuilles 16 et l'armature 14 se déplacent dans une deuxième direction opposée à la première direction, en s'éloignant du disque de friction 15 de sorte à le libérer et autoriser sa rotation.

Le dispositif de freinage électromagnétique 5 est en outre pourvu d'un capteur de position 40 de la partie intermédiaire monté sur une face périphérique du corps 10 et prévu pour détecter la position de l'armature 14, de sorte à vérifier si l'armature est au contact ou non du disque de friction 15.

Le capteur de position 40 est ici muni d'un boitier électronique externe et d'un mécanisme dit plongeur 45 assujetti mécaniquement à l'armature 14 et qui comporte notamment une tige partiellement en saillie depuis l'armature 14 en direction du disque de friction 15, et autour de laquelle est monté un organe ressort.

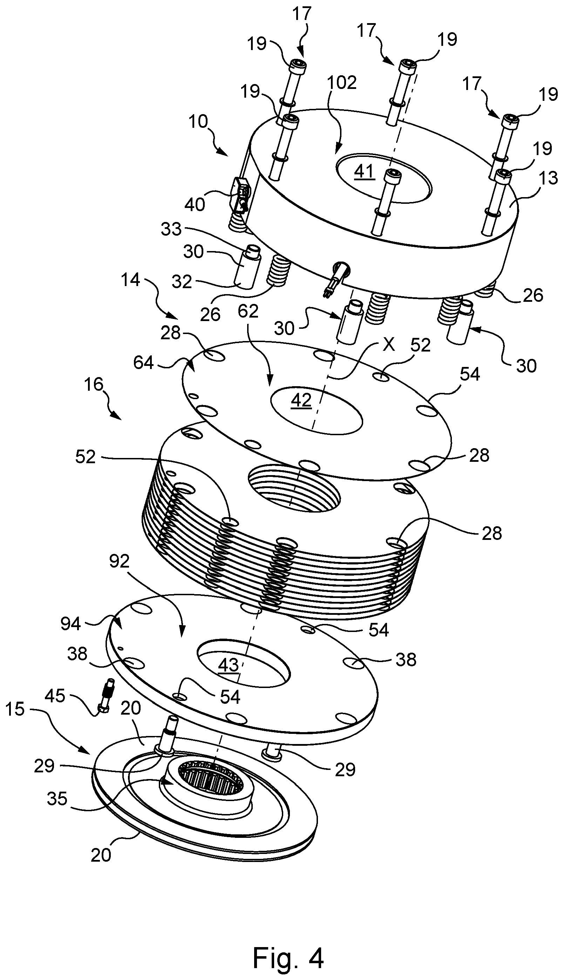

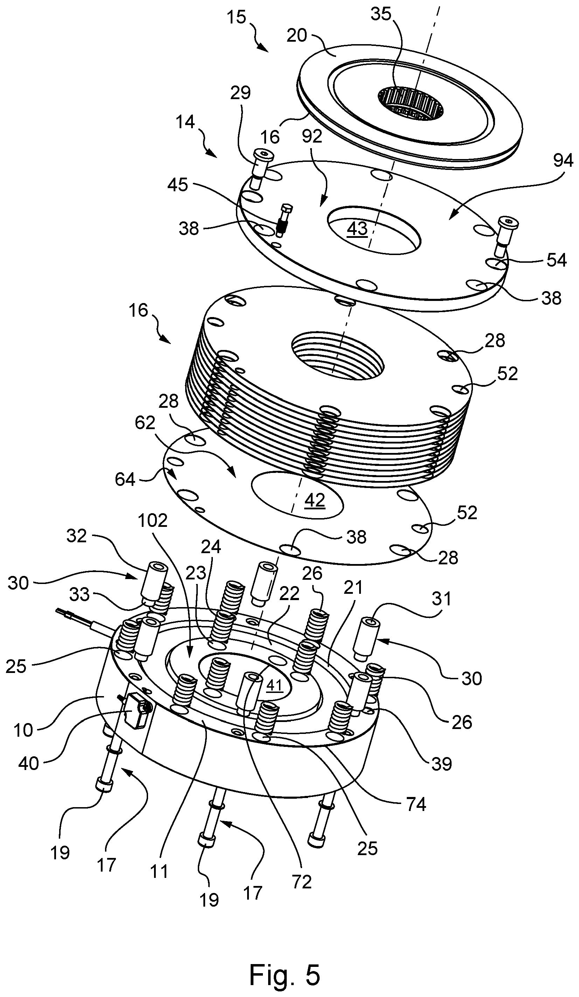

Les figures 4 à 7 montrent le dispositif de freinage électromagnétique 5 plus en détail.

En particulier, le corps 10 du dispositif de freinage électromagnétique 5 présente une face interne 11 et une face externe 13 opposée axialement à la face interne 11.

La face interne 11 comporte un bord périphérique interne 72 et un bord périphérique externe 74.

Le corps 10 est pourvu d'un orifice central 41 autour duquel se trouve le bord périphérique interne 72, et qui délimite l'ouverture centrale 12 du dispositif de freinage électromagnétique 5.

Le corps 10 est pourvu d'un logement 21 débouchant sur sa face interne 11. Le logement 21 est concentrique à l'orifice central 41 du corps 10 et ménagé entre les bords périphériques interne et externe 72 et 74 de la face interne 11 du corps 10.

Le dispositif de freinage électromagnétique 5 comporte une bobine électrique 22 qui est reçue dans le logement 21 en étant sensiblement à fleur de la face interne 11 du corps 10. La bobine 22 est alimentée par des fils conducteurs 47 traversant une face périphérique du corps 10.

Le corps 10 est aussi pourvu de trous borgnes 23 et 25 débouchant sur sa face interne 11.

Le dispositif de freinage électromagnétique 5 comporte en outre des ressorts internes et externes 24 et 26 formés ici de ressorts de compression hélicoïdaux. En variante, il pourrait s'agir de rondelles ressort ou tout autre type de système mécanique élastique capable d'exercer une sollicitation.

Les ressorts internes et externes 24 et 26 sont au moins partiellement reçus dans les trous borgnes 23 et 25 et s'étendent en saillie depuis la face interne 11 du corps 10.

Les ressorts internes et externes 24 et 26 sont prévus pour venir en contact avec une des feuilles 16 métalliques magnétiques qui se trouve directement en regard de la face interne 11 du corps 10.

En particulier le corps 10 est pourvu d'une première série de trous borgnes 23 régulièrement répartis le long du bord périphérique interne 72 de la face interne 11 et une seconde série de trous borgnes 25 régulièrement répartis le long du bord périphérique externe 74 de la face interne 11.

Les première et seconde séries de trous borgnes 23 et 25 sont ainsi disposées de part et d'autre du logement 21 qui les sépare.

Les trous borgnes 23 de la première série reçoivent les ressorts internes 24 tandis que les trous borgnes 25 de la seconde série reçoivent les ressorts externes 26.

La profondeur des trous borgnes 23 et 25 peut être identique ou différente d'une série à l'autre, tandis que les ressorts internes et externes 24 et 26 peuvent être identiques ou différents, notamment en ce qui concerne leur raideur, longueur, diamètre et état de compression.

Dans l'exemple illustré, la première série est formée par trois trous borgnes 23 tandis que la seconde série est formée par huit trous borgnes 25.

Les trous borgnes 23 et 25 de chaque série sont ici répartis de manière concentrique.

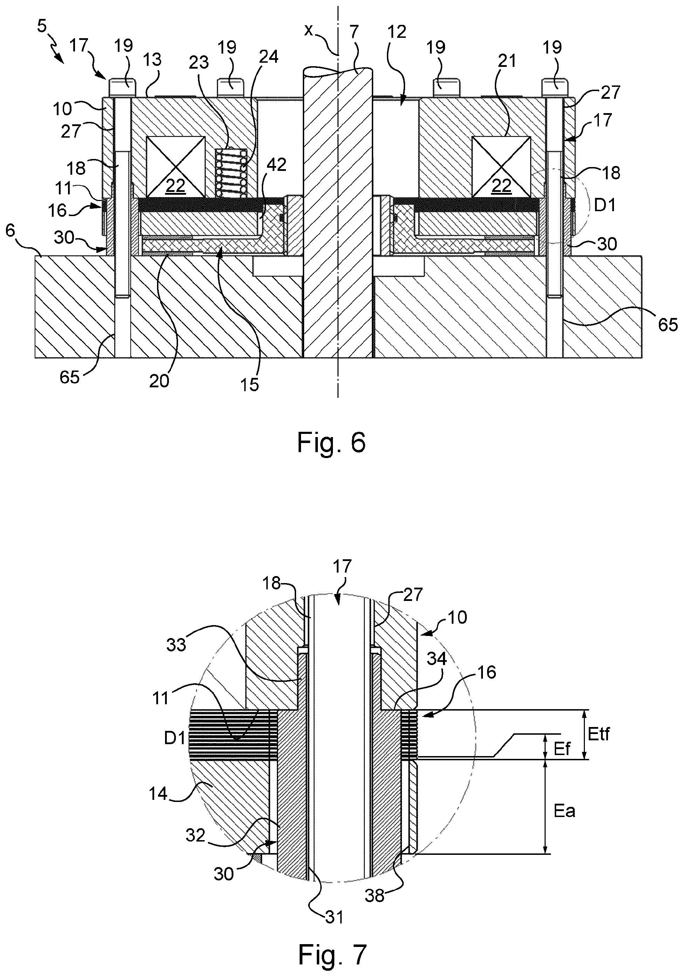

Le corps 10 est également pourvu de trous traversant 27 (figure 6) qui sont ici régulièrement répartis le long du bord périphérique externe 74 de la face interne 11 du corps 10 et s'étendent parallèlement à l'axe central X, lesquels trous traversant 27 sont configurés pour être traversés par les vis d'assemblage 17.

Chaque trou traversant 27 débouche à une première extrémité sur la face interne 11 du corps 10 et à une deuxième extrémité, opposée à la première extrémité, sur la face externe 13 du corps 10.

La première extrémité de chaque trou traversant 27 débouchant sur la face interne 11 du corps 10 est élargie, comme visible sur la figure 7.

Le corps 10 est aussi pourvu de trous borgnes 39 qui sont ici situés le long du bord périphérique externe 74 de la face interne 11 du corps 10 et s'étendent parallèlement à l'axe central X. Le corps 10 est ici pourvu de deux trous borgnes 39 qui sont diamétralement opposés. Les trous borgnes 39 sont configurés pour recevoir des colonnette de guidage 29 du dispositif de freinage.

Lorsqu'elles sont reçues dans les trous borgnes 39, les colonnettes de guidage 29 font saillie depuis la face interne 11 du corps 10.

Les colonnettes de guidage 29 sont configurées d'une part pour guider les feuilles 16 et l'armature 14 en translation dans l'espace 9 et d'autre part pour assurer une résistance à l'effort de l'armature 14 lorsque cette dernière vient en appui contre le disque de friction 15.

Les entretoises 30 du dispositif de freinage électromagnétique 5 comportent un orifice traversant 31 qui est configuré pour être traversé par une vis d'assemblage 17.

Les entretoises 30 sont ainsi régulièrement réparties le long du bord périphérique externe 74 de la face interne 11 du corps 10 et sont disposées de sorte que l'orifice traversant 31 se trouve en regard des trous traversants 27 du corps 10.

En particulier, les entretoises 30 sont pourvues, à une première extrémité, d'une portion principale 32 configurée pour venir en appui sur le support 6 et, à une deuxième extrémité opposée à la première extrémité, d'une portion amincie 33 qui est raccordée à la portion principale 32 par un épaulement 34. La première extrémité élargie de chaque trou traversant 27 est configurée pour recevoir la portion amincie 33 de chaque entretoise 30 jusqu'à ce que la face interne 11 du corps 10 vienne en butée contre l'épaulement 34.

Ainsi, la portion principale 32 a une longueur, selon l'axe central X, qui correspond à la distance séparant le corps 10 du support 6.

Dans l'exemple illustré, cette distance est égale à la somme des dimensions, selon l'axe central X, du disque 15, de l'armature 14 de feuilles 16, et d'un entrefer permettant notamment la mobilité de ces éléments.

Il est ainsi possible d'ajuster la distance séparant le corps 10 du support 6 en remplaçant les entretoises 30 par des entretoises ayant une portion principale 32 qui présente des dimensions différentes.

En d'autres termes, l'entrefer peut être ajusté en sélectionnant une longueur prédéfinie de la portion principale 32.

Dans une variante non illustrée, cela pourrait permettre de former un dispositif ayant un entrefer de dimension variable.

Dans une autre variante non illustrée, l'épaulement de l'entretoise peut venir en butée contre la feuille la plus éloignée du corps.

Afin d'assujettir le corps 10 au support 6, le support 6 est pourvu de trous taraudés 65 ménagés en complémentarité des trous traversant 27 du corps 10, lesquels trous taraudés 65 sont configurés pour recevoir les vis d'assemblage 17.

Comme illustré à la figure 6, chaque vis d'assemblage 17 est munie d'une portion filetée 18 à une première extrémité et d'une tête 19 à une deuxième extrémité opposée à la première extrémité.

Les vis d'assemblage 17 sont insérées par leur première extrémité dans les trous traversant 27 jusqu'à ce que la tête 19 vienne en butée contre la face externe 13 du corps 10. La portion filetée 18 débouche en saillie du côté de la face interne 11 pour être vissée dans les trous taraudés 65 du support 6.

Les feuilles 16 métalliques magnétiques sont pourvues d'un orifice central 42 qui délimite l'ouverture centrale 12 du dispositif de freinage électromagnétique 5. Chaque feuille 16 présente une section identique sensiblement annulaire.

Les feuilles 16 métalliques magnétiques présentent une zone périphérique interne 62 et une zone périphérique externe 64 et ont ici une épaisseur Ef constante.

Chaque feuille 16 métallique magnétique comporte des premiers orifices de guidage 28 qui sont traversant et ménagés sensiblement dans la zone périphérique externe 64 de chaque feuille 16. Ces premiers orifices de guidage 28 sont ménagés en complémentarité des trous traversants 27 du corps 10 et des trous taraudés 65 du support 6. Chaque premier orifice de guidage 28 est configuré pour être traversé par la portion principale 32 de chaque entretoise 30.

Chaque feuille 16 métallique magnétique comporte aussi des deuxièmes orifices de guidage 52 qui sont traversant et ménagés sensiblement dans la zone périphérique externe 64 de chaque feuille 16. Les deuxièmes orifices de guidage 52 sont configurés pour recevoir les colonnettes de guidage 29 avec un ajustement permettant le déplacement des feuilles 16 le long des colonnettes de guidage 29. Cela permet d'une part de guider les feuilles 16 métalliques magnétiques en translation entre le corps 10 et le support 6, et d'autre part de bloquer la rotation des feuilles 16 autour de l'axe central X du corps 10.

Les feuilles 16 métalliques magnétiques présentent une surface pleine en vis-à-vis des trous borgnes 23 et 25 du corps 10 de sorte que les ressorts internes et externes 24 et 26 viennent en appui contre les feuilles 16.

Dans l'exemple représenté, le dispositif de freinage électromagnétique 5 comporte treize feuilles 16 métalliques magnétiques identiques.

En variante, le dispositif de freinage électromagnétique peut comporter plus ou moins de feuilles 16 métalliques magnétiques identiques, et plus généralement il peut y avoir entre deux et trente feuilles identiques ou différentes.

Chaque feuille 16 a ici une épaisseur Ef d'environ 0,5 mm. Plus généralement, les feuilles 16 peuvent avoir une épaisseur Ef comprise entre environ 0,3 mm et environ 5 mm.

Lorsqu'elles sont en appui les unes contre les autres, la pluralité de feuilles 16 métalliques magnétiques présente une épaisseur Eft prédéterminée qui correspond à la somme des épaisseurs Ef de chaque feuille 16.

Les feuilles 16 peuvent être isolées électriquement entre elles, par exemple en étant revêtues d'un vernis. Les feuilles 16 peuvent être pourvues d'un traitement anticorrosion, tout comme l'armature 14 et le corps 10.

L'armature 14 a une structure massive et se présente sous la forme d'une plaque d'épaisseur Ea constante.

L'armature 14 est pourvue d'un orifice central 43 délimitant l'ouverture centrale 12 du dispositif de freinage électromagnétique 5.

L'armature 14 présente une zone périphérique interne 92 et une zone périphérique externe 94.

L'armature 14 est pourvue de troisièmes orifices de guidage 38 qui sont traversant et ménagés sensiblement dans la zone périphérique externe 94 de l'armature 14. Les troisièmes orifices de guidage 38 sont ménagés en complémentarité des premiers orifices de guidage 28 des feuilles 16 métalliques magnétiques. Chaque troisième orifice de guidage 38 est configuré pour être traversé par la portion principale 32 de chaque entretoise 30.

L'armature comporte aussi des quatrièmes orifices de guidage 54 qui sont traversant et ménagés sensiblement dans la zone périphérique externe 94 de l'armature. Les quatrième orifices de guidage 54 sont configurés pour recevoir les colonnettes de guidage 29 avec un ajustement permettant le déplacement de l'armature 14 le long des colonnettes de guidage 29.

En particulier, l'ajustement entre les deuxièmes et quatrièmes orifices de guidage 52 et 54 et les colonnettes de guidage 29 est inférieur à l'ajustement entre les premiers et troisièmes 28 et 38 orifices de guidage et les entretoises 30.

L'armature 14 a ici une épaisseur Ea d'environ 12 mm. Plus généralement, l'armature 14 peut avoir une épaisseur Ea comprise entre environ 0,5 mm et environ 40 mm. L'épaisseur Ea de l'armature 14 est bien supérieure à l'épaisseur Ef de chaque feuille 16 métallique magnétique.

Le rapport entre l'épaisseur Ea de l'armature 14 et l'épaisseur Eft des feuilles 16 métalliques magnétiques en appui les unes contre les autres est ici égal à environ 1,86. Plus généralement, ce rapport peut être compris entre environ 0,2 et environ 30, voire entre environ 0,2 et 5.

L'armature 14 et les feuilles 16 métalliques magnétiques sont des éléments distincts, et les feuilles 16 elles-mêmes sont des éléments distincts, de sorte à pouvoir s'écarter les uns des autres. Autrement dit, l'armature 14 est distincte des feuilles 16 et les feuilles 16 sont distinctes les unes des autres.

Le disque de friction 15 présente une section qui est inférieure à celle de l'armature 14 et des feuilles 16 de sorte que les entretoises 30 se trouvent autour du disque de friction 15.

Le disque de friction 15 comporte un moyeu 35 présentant une partie saillante s'étendant axialement vers le corps 10. Le moyeu 35 est ici cannelé.

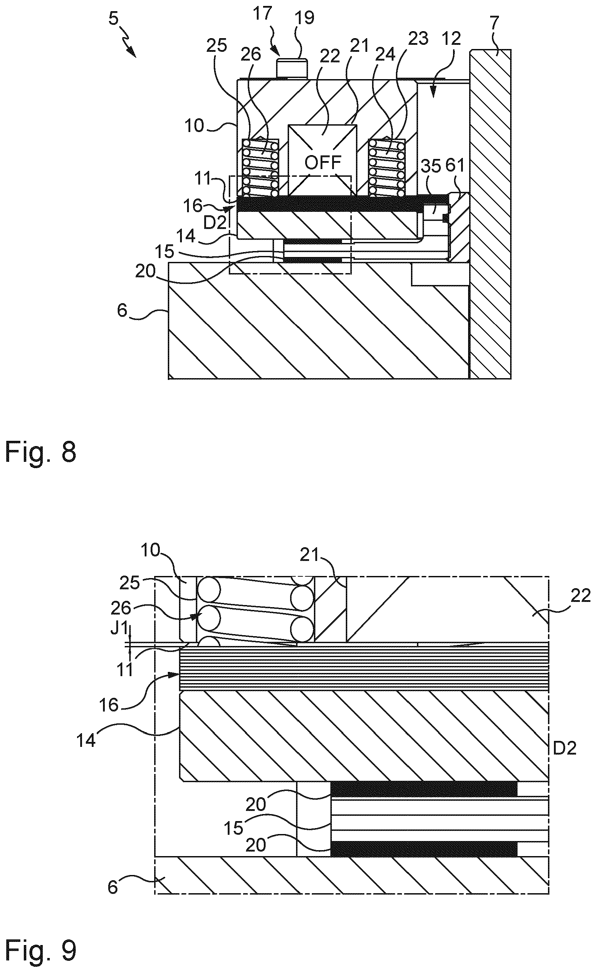

Comme illustré à la figure 8, l'arbre rotatif 7 comporte une portion cannelée 61 complémentaire du moyeu 35. La portion cannelée 61 est configurée pour venir en prise coulissante avec le moyeu 35. De cette manière, le disque de friction 15 peut tourner avec l'arbre rotatif 7 et coulisser axialement le long de la portion cannelée 61 de l'arbre rotatif 7.

La partie saillante du moyeu 35 est configurée pour être reçue dans les orifices centraux 42 et 43 ménagés respectivement sur les feuilles 16 et sur l'armature 14.

Les figures 8 à 11, puis 12 , montrent respectivement le dispositif de freinage électromagnétique 5 dans une configuration de freinage ou de défreinage, et puis lors du passage de la configuration de défreinage à la configuration freinage.

Comme visible sur les figures 8 et 9, le dispositif de freinage électromagnétique 5 se trouve dans sa configuration de freinage dans laquelle la bobine électrique 22 est au repos, c'est-à-dire non alimentée en courant, et l'armature 14 est contre le disque de friction 15, sous l'action des ressorts internes et externes 24 et 26.

Les ressorts internes et externes 24 et 26 agissent ainsi sur l'armature 14 par l'intermédiaire des feuilles 16. L'armature 14 est poussée dans la première direction jusqu'à venir au contact de la garniture 20 du disque de friction 15 et pousser ce dernier contre le support 6.

En particulier, les ressorts internes 24 sont configurés pour agir vers la zone périphérique interne 62 des feuilles 16, tandis que les ressorts externes 26 sont configurés pour agir vers la zone périphérique externe 64 des feuilles 16.

L'arbre rotatif 7 est ainsi bloqué en rotation par l'enserrement du disque de friction 15 entre l'armature 14 et le support 6 sous l'action des ressorts internes et externes 24 et 26.

Dans cette configuration, un espace J1 (figure 9) correspondant à l'entrefer, est formé entre la face interne 11 du corps 10 et les feuilles 16. L'espace J1 peut être ajusté en modifiant l'épaisseur Ea et/ou le nombre de feuilles 16, l'épaisseur Ea de l'armature 14 et/ou encore la taille de la portion principale 32 des entretoises 30.

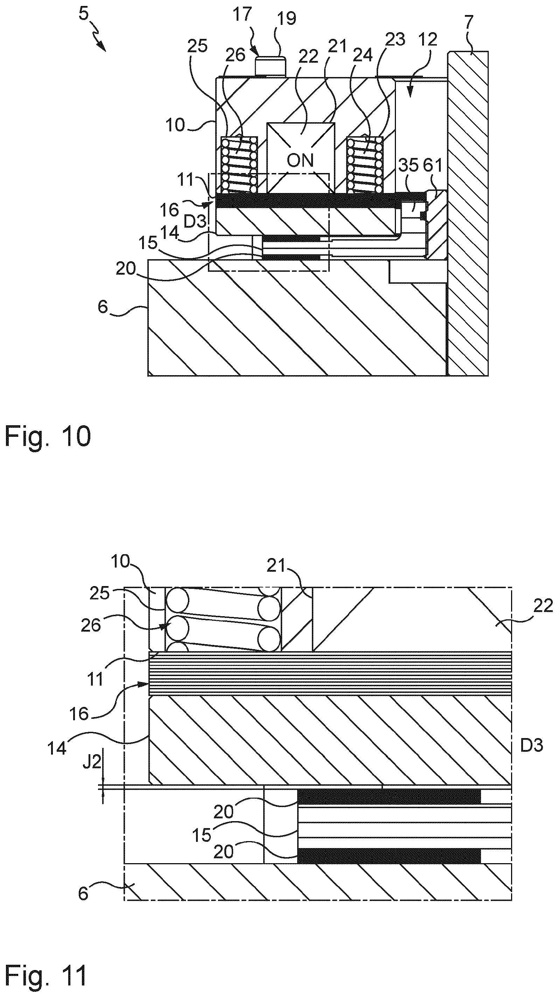

Comme visible sur les figures 10 et 11, le dispositif de freinage électromagnétique 5 se trouve dans sa configuration de défreinage dans laquelle la bobine électrique 22 est alimentée en courant.

La bobine électrique 22 est configurée pour générer un flux magnétique circulant dans les feuilles 16 métalliques magnétiques, dans le corps 10 et dans l'armature 14.

Le flux magnétique généré par la bobine électrique 22 attire ainsi les feuilles 16 métalliques magnétiques et l'armature 14 contre la face interne 11 du corps 10.

A cet effet, l'armature 14 et les feuilles 16 sont réalisées en un matériau magnétique. Par exemple, l'armature 14 peut être réalisée en fonte, en acier tel que de l'acier non allié de type C10, C22 ou C45, tandis que les feuilles 16 peuvent être réalisées en acier.

L'armature 14 et les feuilles 16 sont déplacées sous l'action du flux magnétique dans la deuxième direction opposée à la première direction, dirigée vers la face interne 11 du corps 10 jusqu'à ce que l'armature 14 plaque les feuilles 16 contre la face interne 11 du corps 10.

Dans cette configuration, un espace J2 (figure 11) correspondant à l'entrefer, est formé entre l'armature 14 et le disque de friction 15. L'espace J2 peut être ajusté de la même manière que l'espace J1 situé entre la face interne 11 du corps 10 et les feuilles 16.

Dans la configuration de défreinage, le disque de friction 15 est ainsi à distance de l'armature 14 et du support 6 et est libre en rotation.

Dans chacune des configurations de freinage ou de défreinage précédemment décrites, les feuilles 16 sont poussées dans la première direction contre l'armature 14 et sont compressées entre elles, notamment au niveau des zones d'application de l'effort exercé par les ressorts internes et externes 24 et 26.

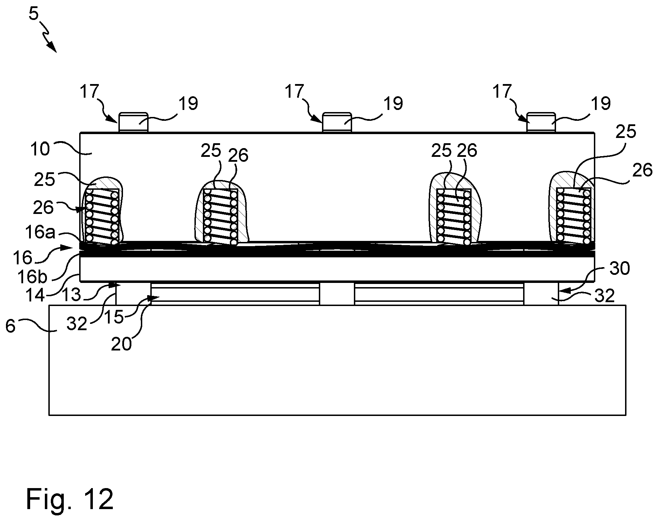

Sur la figure 12, le dispositif de freinage électromagnétique 5 se trouve dans une configuration intermédiaire correspondant au passage de la configuration de freinage, illustrée sur les figures 8 et 9, à la configuration de défreinage, illustrée sur les figures 10 et 11.

Lors du passage de la configuration de freinage à la configuration de défreinage, la bobine électrique 22 est alimentée en courant et le flux magnétique généré par cette bobine électrique 22 circule progressivement depuis la feuille 16 directement en regard de la face interne 11 du corps 10 jusqu'à l'armature 14.

La circulation progressive du flux magnétique entraine un déplacement successif et progressif des feuilles 16 puis de l'armature 14 dans la deuxième direction.

Dans l'exemple illustré, on distingue parmi les feuilles 16 métalliques magnétiques, des feuilles, notées 16a pour les distinguer, qui sont attirées vers la face interne 11 du corps 10 sous l'action du flux magnétique généré par la bobine électrique 22 et des feuilles, notées 16b pour les distinguer, qui ne sont pas encore magnétisées ou soumises à un flux magnétique suffisant pour les attirer.

Les feuilles 16b sont donc encore compressées contre l'armature 14 au moins au niveau des zones d'application de l'effort exercé par les ressorts internes et externes 24 et 26 tandis que les feuilles 16a magnétisées sont déformées au niveau de zones restantes jusqu'à venir en butée contre la face interne 11 du corps 10 sous l'action du flux magnétique généré par la bobine électrique 22.

L'action des ressorts internes et externes 24 et 26 ainsi que l'action du flux magnétique généré par la bobine électrique 22 concourent ainsi à la déformation des feuilles 16b magnétisées.

Ceci est possible d'une part car les feuilles 16 présentent une rigidité suffisamment faible ne leur permettant pas de compresser les ressorts internes et externes 24 et 26 en étant sous l'action du flux magnétique et d'autre part car elles sont indépendantes les unes des autres de sorte qu'elles peuvent s'écarter dans la première direction.

Les feuilles 16b magnétisées se déforment radialement entre chacune des zones d'application de l'effort exercé par les ressorts externes 26 et se déforment aussi circonférentiellement entre chacune des zones d'application de l'effort appliqué par les ressorts internes et externes 24 et 26.

L'armature 14 se décolle donc du disque de friction 15 lorsqu'elle est à son tour magnétisée jusqu'à venir contre les feuilles 16. Les feuilles 16 sont ainsi remises en forme entre l'armature 14 et la face interne 11 du corps 10.

Ceci est possible grâce à la structure massive de l'armature 14.

L'énergie cinétique de l'armature 14 se déplaçant dans la deuxième direction est dissipée grâce aux feuilles 16, ce qui permet notamment de réduire le bruit lorsque le dispositif 5 passe de sa configuration de freinage à sa configuration de défreinage.

Le fonctionnement du dispositif de freinage électromagnétique 5 est assez similaire lors du passage de la configuration de défreinage à la configuration de freinage.

**Il** diffère notamment en ce que la bobine électrique 22 n'est plus alimentée en courant et le flux magnétique se dissipe progressivement depuis l'armature 14 jusqu'à la feuille 16 directement en regard de la face interne 11 du corps 10, provoquant le déplacement successif et progressif de l'armature 14 et des feuilles 16.

L'armature 14 est ainsi déplacée dans la première direction avant les feuilles 16 dès que le flux magnétique n'est plus suffisant pour l'attirer, de sorte qu'il existe un espace entre la face interne 11 du corps 10 et la feuille 16 directement adjacente à la face interne 11, lequel espace permet aux feuilles 16b magnétisées de se déformer sous l'action des ressorts internes et externes 24 et 26.

La dissipation progressive du flux magnétique entraine un déplacement successif et progressif des feuilles 16 dans la première direction, formant ainsi une pluralité d'entrefers entre les feuilles 16. Ces entrefers génèrent une pluralité de flux magnétiques, ou ponts de flux magnétiques, entre la face interne 11 du corps 10 et l'armature 14, qui permettent de dissiper plus rapidement le flux magnétique dans l'armature 14.

Les feuilles 16 sont déplacées successivement jusqu'à venir contre l'armature 14, ce qui permet notamment de diminuer la vitesse de déplacement de l'armature 14 contre le disque de friction 15.

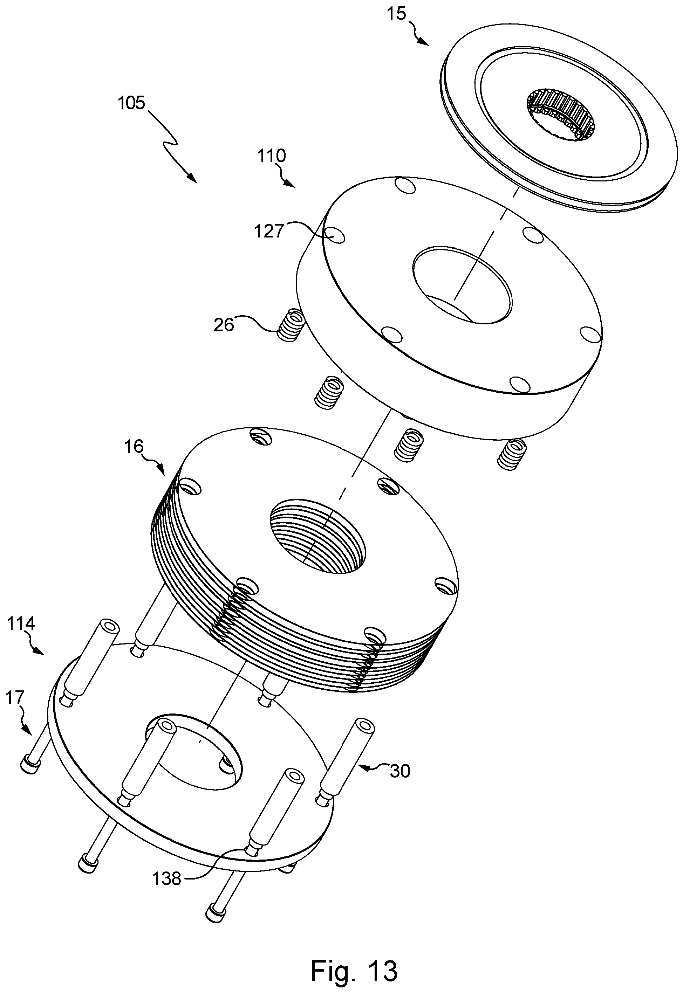

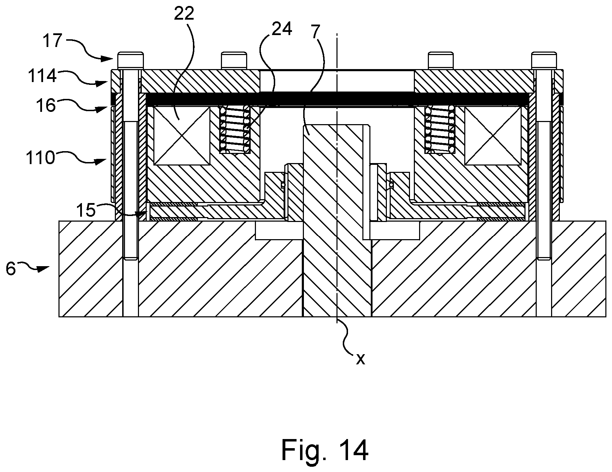

Les figures 13 et 14 montrent le dispositif de freinage électromagnétique selon un deuxième mode de réalisation et dans lequel seul l'agencement du corps et de l'armature diffère du dispositif de freinage électromagnétique visible sur les figures 2 à12.

Pour simplifier la description, les mêmes références numériques ont donc été utilisées sauf pour le corps et l'armature pour lesquels des références similaires mais additionnées du nombre 100 ont été utilisées.

Dans ce dispositif 105, les entretoises 30 sont disposées entre l'armature 114 magnétique et le support 6 pour définir un espace entre ces éléments.

Les entretoises 30 sont ici configurées pour maintenir une distance prédéterminée entre l'armature 114 et le support 6. Les feuilles 16 métalliques magnétiques, le corps 110 et le disque de friction 15 sont reçus dans l'espace 9 formé entre l'armature 114 et le support 6.

En particulier, une première extrémité de la portion principale de chaque entretoise 30 est configurée pour venir en appui contre le support 6 et une deuxième extrémité opposée à la première extrémité est configurée pour venir en appui contre l'armature 114.

Dans une variante non illustrée, la deuxième extrémité de chaque entretoise peut être configurée pour venir en appui contre la feuille la plus éloignée de l'armature.

Les vis d'assemblage 17 traversent l'orifice traversant de chaque entretoise. En particulier, les vis d'assemblage 17 sont insérées par leur première extrémité dans les trous traversant jusqu'à ce que la tête vienne en butée contre l'armature 114. La portion filetée débouche en saillie du côté de la première extrémité de l'entretoise 30 pour être vissée dans les trous taraudés du support 6.

Les feuilles 16 sont agencées entre le corps 110 et l'armature 114, le corps 110 est agencé entre les feuilles 16 et le disque de friction 15 est agencé entre le corps 110 et le support 6.

Dans ce deuxième mode de réalisation du dispositif de freinage électromagnétique 5, le corps 110 forme la partie intermédiaire tandis que l'armature 114 forme la partie externe. En effet, les feuilles 16 et le corps 110 sont montés mobiles en translation sur l'arbre rotatif 7 et par rapport à l'armature 114, dans l'espace 9, tandis que l'armature 114 est fixe par rapport au support 6.

Le dispositif de freinage électromagnétique 105 est configuré de sorte que, lorsqu'il n'est pas alimenté électriquement, les feuilles 16 et le corps 110 se déplacent dans la première direction dite de freinage vers le disque de friction 15 jusqu'à ce que le corps 110 vienne en appui contre le disque de friction 15 pour le bloquer en rotation et ainsi interdire la rotation de l'arbre rotatif 7.

Au contraire, lorsque le dispositif de freinage électromagnétique 105 est alimenté électriquement, les feuilles 16 et le corps 110 se déplacent au moins partiellement dans la deuxième direction, en s'éloignant du disque de friction 15 de sorte à le libérer et autoriser sa rotation.

Le capteur de position est ici prévu pour détecter la position du corps 110, de sorte à vérifier si le corps 110 est au contact ou non du disque de friction 15. Le mécanisme dit plongeur (non représenté) est assujetti mécaniquement sur le corps 110 et la tige qu'il comporte fait partiellement saillie depuis le corps 110 en direction du disque de friction 15, et autour de laquelle est monté un organe ressort.

Les trous traversants 127 sont ici configurés pour être traversés par la portion principale de chaque entretoise 30. Contrairement au premier mode de réalisation, les trous traversant 127 n'ont pas d'extrémité élargie mais présentent une section constante permettant le déplacement du corps 110 le long de la portion principale des entretoises 30.

Les troisièmes orifices de guidage 138 sont configurés pour recevoir la portion amincie des entretoises 30 ainsi que les vis d'assemblage 17.

Chaque troisième orifice de guidage 138 débouche à une première extrémité sur une face de l'armature 114 tournée vers les feuilles 16 et à une deuxième extrémité, opposée à la première extrémité, sur une face opposée à la face tournée vers les feuilles 16.

En particulier, la première extrémité de chaque troisième orifice de guidage 138 débouchant sur la face tournée vers les feuilles 16 est ici élargie et configurée pour recevoir la portion amincie de chaque entretoise 30 jusqu'à ce que la face de l'armature 114 tournée vers les feuilles 16 vienne en butée contre l'épaulement.

Il est ainsi possible d'ajuster la distance séparant l'armature 114 du support 6 en remplaçant les entretoises 30 par des entretoises ayant une portion principale qui présente des dimensions différentes.

La figure 14 montre le dispositif de freinage électromagnétique 105 plus en détail.

Les vis d'assemblage 17 sont insérées par leur première extrémité dans les troisièmes orifices de guidage 138 jusqu'à ce que la tête vienne en butée contre la face de l'armature 114 du côté opposé aux feuilles 16. La portion filetée débouche en saillie depuis la face de l'armature 114 tournée vers les feuilles 16 pour être vissée dans les trous taraudés 65 du support 6.

La portion principale des entretoises 30 est ainsi configurée d'une part pour guider les feuilles 16 et le corps 110 en translation dans l'espace 9 et, d'autre part, pour assurer une résistance à l'effort du corps 110 lorsque ce dernier vient en appui contre le disque de friction 15.

Le disque de friction 15 présente une section inférieure à celle du corps 110 dont la face externe est configurée pour venir en contact avec une des garnitures du disque de friction 15.

La partie saillante du moyeu est configurée pour être reçue dans l'ouverture centrale du corps 110.

Lorsque le dispositif de freinage électromagnétique 105 se trouve dans sa configuration de freinage, le corps 110 est déplacé dans la première direction, vers le disque de friction 15, sous l'action des ressorts internes et externes 24 et 26 et les feuilles 16 sont contre l'armature 114, également sous l'action des ressorts internes et externes 24 et 26.

En particulier, les ressorts internes et externes 24 et 26 agissent sur l'armature 114 par l'intermédiaire des feuilles 16, et poussent le corps 110 par contre-réaction dans la première direction jusqu'à venir au contact de la garniture du disque de friction 15 et pousser ce dernier contre le support 6.

L'arbre rotatif 7 est ainsi bloqué en rotation par l'enserrement du disque de friction 15 entre le corps 110 et le support 6 sous l'action des ressorts internes et externes 24 et 26.

Dans cette configuration, un espace (non représenté) est formé entre la face interne du corps 110 et les feuilles 16.

Lorsque le dispositif de freinage électromagnétique 105 se trouve dans sa configuration de défreinage, le corps 110 est déplacé dans la deuxième direction sous l'action du flux magnétique généré par la bobine électrique 22 et les feuilles 16 sont contre l'armature 114.

Le disque de friction 15 est ainsi éloigné du corps 110 et du support 6 et est donc libre en rotation.

Dans cette configuration, un espace (non représenté) est formé entre la face externe du corps 110 et le disque de friction 15.

Dans chacune des configurations de freinage ou de défreinage précédemment décrites, les feuilles 16 sont poussées dans la deuxième direction contre l'armature 114 et sont compressées entre elles, notamment au niveau des zones d'application de l'effort exercé par les ressorts internes et externes 24 et 26.

Lorsque le dispositif 105 se trouve dans une configuration intermédiaire correspondant au passage de la configuration de freinage à la configuration de défreinage, la circulation progressive du flux magnétique entraine le déplacement successif et progressif de la partie des feuilles 16 se trouvant dans la zone d'application du flux magnétique dans la première direction, puis le déplacement du corps 110 dans la deuxième direction.

Les feuilles qui ne sont pas encore magnétisées ou soumises à un flux magnétique suffisant pour les attirer sont donc encore compressées contre l'armature 114 au moins au niveau des zones d'application de l'effort exercé par les ressorts internes et externes 24 et 26 tandis que les feuilles magnétisées sont déformées au niveau des zones restantes sous l'action du flux magnétique jusqu'à ce que la face interne du corps 110 vienne en contact avec ces feuilles magnétisées.

Lorsque le flux magnétique est suffisamment important, le corps 110 se décolle donc du disque de friction 15 jusqu'à venir contre les feuilles 16 qui sont remises en forme par compression entre la face interne du corps 110 et l'armature 114.

L'énergie cinétique du corps 110 se déplaçant dans la deuxième direction est dissipée grâce aux feuilles 16, ce qui permet notamment de réduire le bruit lorsque le dispositif de freinage 105 passe de sa configuration de freinage à sa configuration de défreinage.

Lorsque le dispositif 105 se trouve dans une configuration intermédiaire correspondant au passage de la configuration de défreinage à la configuration de freinage, la dissipation progressive du flux magnétique entraine le déplacement du corps 110 dans la première direction dès que le flux magnétique n'est plus suffisant, de sorte qu'il existe un espace entre la face interne du corps 110 et la feuille 16 directement adjacente à la face interne, au moins au niveau des zones d'application de l'effort exercé par les ressorts internes et externes 24 et 26, lequel espace permet aux feuilles encore magnétisées de se déformer sous l'action du flux magnétique restant au niveau des zones éloignées des zones d'application de l'effort exercé par les ressorts internes et externes 24 et 26.

La dissipation progressive du flux magnétique entraine une annulation de la déformation successive et progressive des feuilles 16 et donc de la pluralité d'entrefers entre les feuilles 16.

La ou les parties des feuilles 16 se trouvant dans la zone d'application de l'effort exercé par les ressorts internes et externes 24 et 26 restent compressées contre l'armature 114.

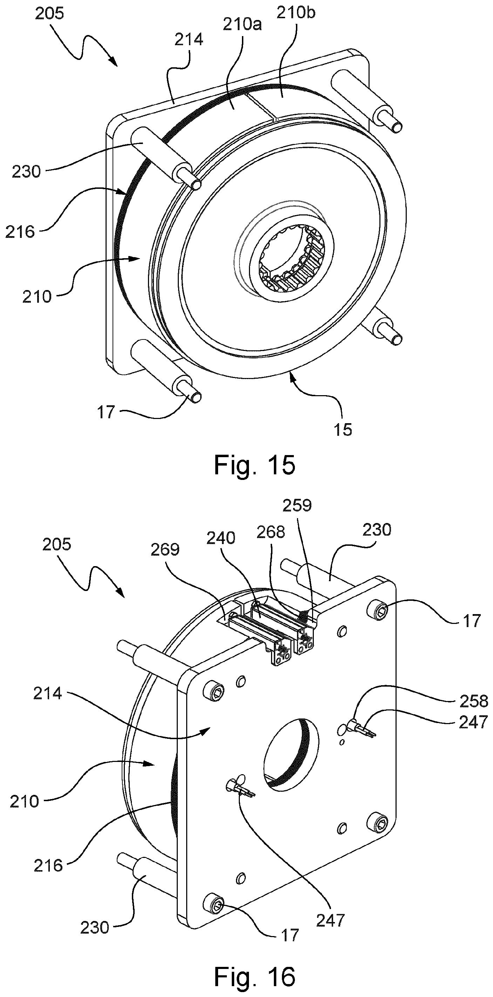

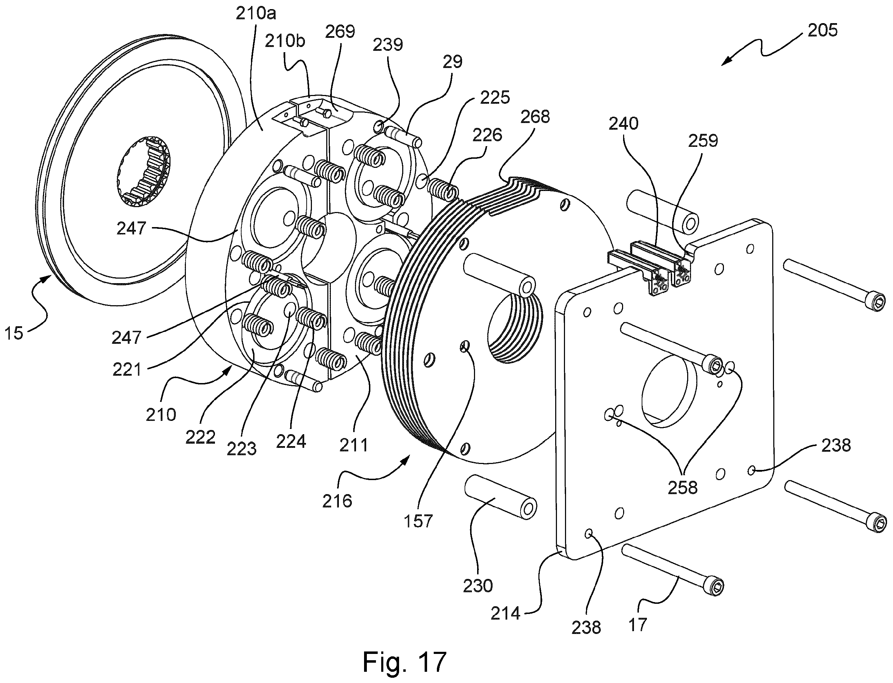

Les figures 15 à 17 illustrent un dispositif de freinage électromagnétique selon un troisième mode de réalisation, du même type que celui décrit en référence aux figures 13 et 14, mais dans lequel le corps, l'armature et les feuilles diffèrent de ce dernier.

Pour simplifier la description, les mêmes références numériques ont donc été utilisées sauf pour le corps, l'armature, les feuilles, les entretoises et le capteur de position de la partie intermédiaire pour lesquels des références similaires mais additionnées du nombre 200 ont été utilisées.

Dans ce dispositif, le corps 210 est formé en deux parties 210a et 210b identiques, chaque partie ayant une section de demi-cercle. Les parties 210a et 210b sont indépendantes l'une de l'autre.

Le corps 210 présente sur sa face interne 211 plusieurs logements 221 de contour fermé, débouchant sur la face interne 211. Dans l'exemple illustré, les logements 221 sont au nombre de quatre, les parties 210a et 210b du corps 210 présentent chacune deux logements 221. Les logements 221 sont identiques et définissent un contour de forme circulaire.

Dans chaque logement 221 est reçue une bobine électrique 222 de forme complémentaire, c'est-à-dire de section circulaire. Ainsi, le dispositif de freinage électromagnétique 205 comporte quatre bobines alimentées indépendamment les unes des autres. Ainsi, lorsqu'une bobine 222 reçue dans un logement 221 de l'une des parties 210a et 210b est mise sous tension, cette partie se déplace indépendamment de l'autre partie du corps 210.

Les trous borgnes 223 sont disposés à l'intérieur des contours fermés définis par chaque logement 221, tandis que les trous borgnes 225 sont disposés à l'extérieur. Pour autant, les trous borgnes 223 et 225 ne sont pas régulièrement répartis le long d'un bord périphérique interne et d'un bord périphérique externe de la face interne 211 du corps 210 comme dans les modes de réalisation précédemment décrits. La face interne 211 du corps 210 présente ici quatre trous borgnes 223 répartis à l'intérieur de chacun des contours fermés formés par les logements 221. Les ressorts internes 224 sont reçus dans les trous borgnes 223 tandis que les ressorts externes 226 sont reçus dans les trous borgnes 225.

Le corps 210 est ici pourvu de quatre trous borgnes 239 configurés pour recevoir les colonnette de guidage 29. Chaque partie 210a, 210b est pourvue de deux trous borgnes 239 qui sont disposés le long du bord périphérique externe 274 de la face interne 211 du corps 210.

L'armature 214 présente ici une forme globalement carrée. Les trous traversant 238 pour le passage des vis d'assemblage 17 sont situés à chaque coin de l'armature 214 de sorte que, comme le montrent les figures 15 et 16, les vis d'assemblage 17 et les entretoises 230 s'étendent à l'extérieur du corps 210. Le corps 210 et les feuilles 216 sont ainsi dépourvus de trous traversant pour le passage des vis d'assemblage et des entretoises.

Les entretoises 230 présentent ici une section constante. Autrement dit, les entretoises 230 ne comportent pas de portion amincie contrairement aux modes de réalisation précédemment décrits.

Le capteur de position 240 prévu pour détecter la position du corps 210 est fixé à l'armature 214 et comporte deux tiges en saillie s'étendant en direction du corps 210. Afin d'intégrer le capteur de position 240 dans l'armature 214, l'armature 214 présente une encoche 259 dans laquelle est fixé le capteur de position 240. Les tiges du capteurs de position 240 s'étendant jusqu'au corps 210, les feuilles 216 et le corps 210 présentent également une encoche 268 et 269. Il est à noter que l'encoche 269 du corps 210 est borgne afin de former une surface de référence permettant au capteur de déterminer la position du corps 210.

Contrairement au mode de réalisation illustré aux figures 2 à 12, les fils conducteurs 247 servant à alimenter les bobines 222 s'étendent depuis la face interne 211 du corps 210 et non depuis sa face périphérique. Chacune des parties 210a et 210b présente un orifice situé entre les logements 221 pour le passage de fils conducteurs 247.

Afin que les fils conducteurs 247 ne soient pas exposés à l'extérieur du dispositif 205, les feuilles 216 et l'armature 214 sont respectivement pourvues d'orifices 257 et 258 prévus pour être traversés par les fils conducteurs 247.

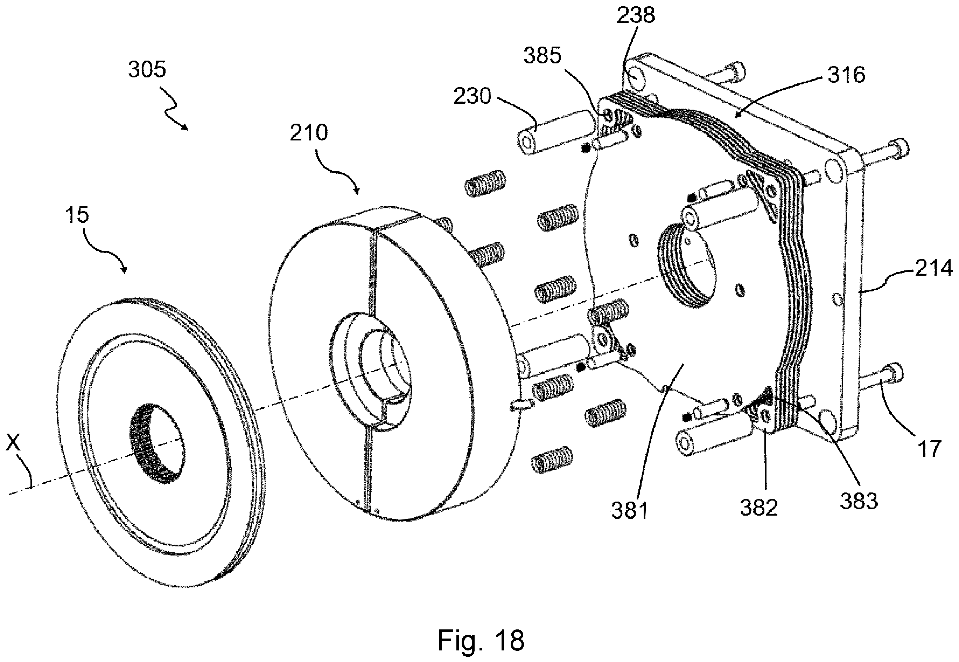

La figure 18 illustre un dispositif de freinage électromagnétique selon un quatrième mode de réalisation, du même type que ceux décrits en référence aux figures 2 à 17, mais avec des feuilles qui sont différentes.

Pour simplifier la description, les mêmes références numériques ont donc été utilisées sauf pour les feuilles pour lesquelles des références similaires mais additionnées du nombre 300 ont été utilisées.

Dans ce dispositif portant la référence 305, chaque feuille 316 comporte une portion principale 381 qui est globalement similaire à la forme des feuilles des modes de réalisation décrits précédemment en référence aux figures 2 à 17.

Chaque feuille 316 comporte, en plus de la portion principale 381, des portions d'appui 382 s'étendant radialement en saillie externe de la portion principale 381. Les portions d'appui 382 sont reliées à la portion principale 381 par des portions de raccord 383.

Chaque portion d'appui 382 est pourvue d'un orifice 385 traversant. Les orifices 385 traversant sont alignés avec les trous traversant 238 de l'armature 214, ce qui permet le passage des vis d'assemblage 17.

Les entretoises 230 ont ici une section transversale dont les dimensions sont supérieures à celles des orifices 385 traversant. Ainsi, les deuxièmes extrémités des entretoises 230 sont en appui contre les portions d'appui 382 d'une des feuilles 316, à savoir la feuille la plus éloignée de l'armature 214.

Les portions d'appui 382 de toutes les feuilles 316 sont en appui les unes contre les autres et forment par exemple des blocs distincts qui sont interposés et maintenus en contact entre les entretoises 230 et l'armature 214. Ainsi, les portions d'appui 382 sont maintenues fixes par rapport à l'armature 214.

Dans l'exemple illustré, chaque entretoise 230 a une longueur égale à la somme des dimensions, selon l'axe central X, du disque 15, du corps 210 et de l'entrefer.

Autrement dit, la longueur des entretoises 230 n'inclut pas l'épaisseur des feuilles 316. Cela permet de s'affranchir des éventuelles tolérances de fabrication des feuilles dans la définition de l'entrefer.

En outre, en fonctionnement, les portions d'appui 382 ne nuisent pas au déplacement et la déformation des portions principales 381 des feuilles 316. En effet, les feuilles 316 sont configurées de sorte que les portions de raccord 383, situées entre les portions d'appui 382 et les portions principales 381, autorisent le déplacement et la déformation des portions principales 381 tout en ayant les portions d'appui 382 immobiles. De cette manière, l'indépendance des portions principales 381 des feuilles 316 est conservée.

En d'autres termes, chaque portion de raccord 383 est configurée pour se déformer lorsque la portion principale 381 associée se déforme sous l'action de l'au moins un organe d'actionnement mécanique et/ou sous l'action de l'au moins un organe d'actionnement électromagnétique.

Bien entendu, le dispositif de freinage électromagnétique 305 peut comporter plus ou moins de portions d'appui, qui peuvent être agencées différemment autour de la portion principale.

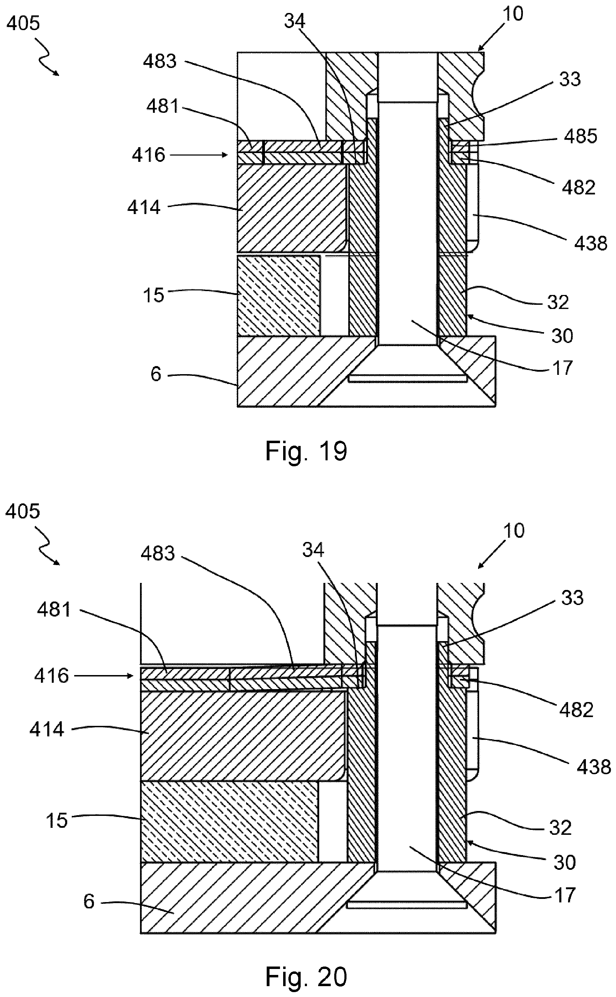

Les figures 19 et 20 illustrent un dispositif de freinage électromagnétique selon un cinquième mode de réalisation, du même type que ceux décrits en référence aux figures 2 à 17, mais avec des feuilles et une armature qui sont ici aussi différentes.

Pour simplifier la description, les mêmes références numériques ont donc été utilisées sauf pour les feuilles et l'armature pour lesquelles des références similaires mais additionnées du nombre 400 ont été utilisées.

En particulier, les figures 19 et 20 montrent respectivement le dispositif de freinage électromagnétique 405 dans une configuration de défreinage et dans une configuration de freinage.

Dans ce dispositif, les portions d'appui 482 et les portions de raccord 483 ne sont pas formées en saillie de la portion principale 481, mais dans la portion principale 481 par le biais de découpes formées dans cette dernière.

En d'autres termes, les portions d'appui 482 et les portions de raccord 483 se trouvent dans l'encombrement des portions principales 481.

Chaque portion principale 481 comporte ici une découpe (non représentée) définissant une portion d'appui 482 et une portion de raccord 483 rattachant la portion d'appui 482 à la portion principale 481. La portion d'appui 482 est située vers un bord externe de la portion principale 481.

La portion d'appui 482 est pourvue d'un orifice 485 traversant.

Chaque portion amincie 33 de l'entretoise 30 est reçue dans un trou 27 du corps 10 et traverse les orifices 485 traversant des feuilles 416 tandis que la section de la portion principale 32 à des dimensions supérieures à celles de l'orifice 385 traversant.

Ainsi, l'épaulement 34 de l'entretoise 30 est ici en appui contre la portion d'appui 482 d'une des feuilles 416, à savoir la feuille la plus éloignée du corps 10, de sorte à maintenir les portions d'appui 482 fixes par rapport au corps 10.

L'armature 414 est pourvue d'encoches de guidage 438 qui sont chacune configurées pour être traversées par la portion principale 32 des entretoises 30.

Les trous taraudés du support 6 sont alignés avec les encoches de guidage 438 et les trous du corps 10 afin de recevoir les vis d'assemblage 17.

Lorsque le dispositif de freinage électromagnétique 405 est dans sa configuration de défreinage, comme illustré à la figure 19, les portions principales 481 sont compressées entre l'armature 414 et le corps 10 tandis que les portions d'appui 482 sont compressées entre l'entretoise 30 et le corps 10.

Lorsque le dispositif de freinage électromagnétique 405 est dans sa configuration de freinage, comme illustré à la figure 20, chaque bloc formé par les portions d'appui 482 est maintenu en contact entre le corps 10 et l'entretoise 30 associée. La portion principale 481 de chaque feuille 416, qui n'est plus sous l'action de l'organe d'actionnement électromagnétique, est poussée par l'organe d'actionnement mécanique (non représenté) vers le disque de friction 15 et se déplace indépendamment de la portion d'appui 482 en déformant la portion de raccord 483.

Bien entendu, le dispositif peut comporter plus ou moins de portions d'appui, qui peuvent être agencées différemment autour de la portion principale.

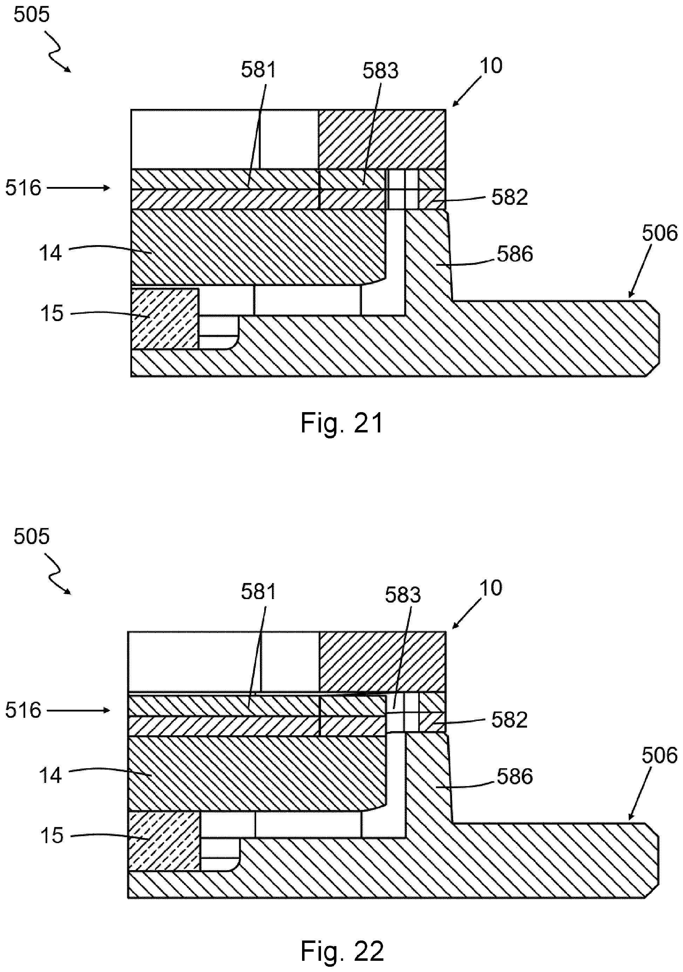

Les figures 21 et 22 illustrent un dispositif de freinage électromagnétique selon un sixième mode de réalisation, du même type que celui décrit en référence aux figures 1 à 20, mais avec des feuilles et un support qui sont différents.

Pour simplifier la description, les mêmes références numériques ont donc été utilisées sauf pour les feuilles et le support pour lesquels des références similaires mais additionnées du nombre 500 ont été utilisées.

En particulier, les figures 21 et 22 montrent respectivement le dispositif de freinage électromagnétique 505 dans une configuration de défreinage et dans une configuration de freinage.

Dans ce dispositif, chaque feuille 516 comporte un organe d'appui 582 s'étendant autour de la portion principale 581 et formant la portion d'appui. En particulier, l'organe d'appui 582 forme un cerclage périphérique ménagé à distance d'un bord externe de la portion principale 581. L'organe d'appui 582 est rattaché à la portion principale 581 par une portion de raccord 583. L'organe d'appui 582 peut servir également d'organe d'étanchéité.

Le support 506 comporte un rebord 586 d'appui formant l'organe de liaison et qui fait saillie en direction du corps 10. Le rebord 586 comporte une extrémité libre qui vient en appui contre l'organe d'appui 582 d'une des feuilles 516. Ainsi, une fonction d'étanchéité peut aussi être assurée.

Les organes d'appui 582 sont en appui les uns contre les autres et forment par exemple un bloc s'étendant en périphérie des feuilles 516. Cet agencement peut permettre notamment de réaliser une interface étanche entre un espace interne, délimité par le corps 10, le support 506 et les organes d'appui 582 et l'extérieur du dispositif 505.

Dans ce mode de réalisation, le dispositif de freinage électromagnétique 505 est dépourvu d'entretoise. Le rebord 586 est ainsi configuré pour maintenir une distance prédéterminée entre le corps 10 et le support 506. Le rebord 586 est par exemple de forme complémentaire à l'organe d'appui 582, qui a par exemple une forme circulaire.

Des variantes non illustrées sont décrites ci-dessous.

Le dispositif peut en outre comporter plusieurs disques de friction, avec un flasque intercalaire monté mobile en translation selon l'axe central et qui est ménagé entre les disques de friction.

Le dispositif peut encore comprendre plusieurs armatures montées mobiles en translation le long de l'axe central mais fixes en rotation.

Le corps peut comporter plus de deux parties distinctes. Les feuilles et/ou l'armature peuvent également comporter deux ou davantage de parties distinctes.

D'autres sections de corps, d'armature, de feuilles et de bobines électriques peuvent être envisagées, par exemple une forme ovale, parallélépipédique ou triangulaire.

Lorsque le dispositif comporte plusieurs bobines, ces bobines peuvent être alimentées indépendamment les unes des autres, ou par un ensemble d'au moins deux bobines. Par exemple, les bobines disposées dans une partie d'un corps peuvent être alimentées indépendamment des bobines disposées dans une autre partie du corps.

La ou les bobines et le ou les logements peuvent être de forme circulaire, ovale, parallélépipédique, triangulaire ou encore en forme de haricot.

Les ressorts de compression peuvent être répartis dans une zone centrale située entre le bord périphérique interne et le bord périphérique externe.

Le corps peut ne présenter qu'une seule série de trous borgnes recevant des ressorts, disposés soit le long d'un bord extérieur, soit le long d'un bord intérieur, soit dans une zone centrale située entre le bord extérieur et le bord intérieur.

Le corps peut être assujetti à un flasque se présentant sous la forme d'une plaque, lorsque le dispositif de freinage électromagnétique n'est pas à proximité directe d'un carter, afin de bloquer le disque de friction en rotation entre l'armature et le flasque.

Les vis d'assemblage permettant d'assujettir mécaniquement le corps au carter ou à un flasque peuvent être remplacées par des boulons.

Le dispositif peut être dépourvu de capteur de position de la partie intermédiaire.

Le dispositif peut être pourvu d'un joint torique logé dans une rainure de la face interne du corps, notamment pour atténuer encore davantage le bruit.

Le corps du dispositif peut-être dépourvu d'une ouverture centrale. Le corps peut comporter une ouverture qui n'est pas traversante, par exemple débouchant uniquement sur la face interne ou la face externe.

Le dispositif peut être pourvu d'une ou plusieurs cales, ou shims, amagnétiques logées entre la face interne du corps et la première feuille métallique adjacente, et/ou entre les feuilles métalliques magnétiques ou encore entre l'armature et la feuille adjacente, notamment pour atténuer encore davantage le bruit ou améliorer les temps de réponse du dispositif.

Grâce à l'invention, un dispositif de freinage électromagnétique simple et performant peut être fourni, permettant une dissipation plus rapide du flux magnétique dans l'armature. Ainsi, il est possible de réduire le temps de passage d'une configuration de défreinage à une configuration de freinage en comparaison d'un dispositif similaire dépourvu de feuilles métalliques magnétiques.

Les feuilles métalliques magnétiques permettent une utilisation répétée du dispositif sans déformation permanente ou usure prématurée du fait de leurs propriétés élastiques.

Bien que dans la description ci-dessus, les aspects particuliers de l'invention, notamment la mise en œuvre du système de mobilité aient été décrits dans le contexte d'un ascenseur, ce dernier pourrait être mis en œuvre dans d'autres configurations, notamment avec d'autres types de systèmes de mobilité.

On rappelle plus généralement que l'invention ne se limite pas aux exemples décrits et représentés.

## Revendications

1. Dispositif de freinage électromagnétique configuré pour bloquer un arbre rotatif (7), comportant un disque de friction (15) monté mobile en translation et en rotation et configuré pour être solidaire de l'arbre rotatif (7), une partie externe (10, 114, 214) et une partie intermédiaire (14, 110, 210, 414) montée mobile en translation entre le disque de friction (15) et la partie externe (10, 114, 214), au moins l'une de la partie externe (10, 114, 214) ou de la partie intermédiaire (14, 110, 210, 414) étant magnétique, au moins un organe d'actionnement électromagnétique (22, 222) et au moins un organe d'actionnement mécanique (24, 26, 224, 226) qui sont logés dans l'autre de la partie externe (10, 114, 214) ou de la partie intermédiaire (14, 110, 210, 414), la partie intermédiaire (14, 110, 210, 414) étant configurée pour se déplacer dans une première direction dite de freinage vers le disque de friction (15) lorsqu'elle est sous l'action de l'au moins un organe d'actionnement mécanique (24, 26, 224, 226), et dans une deuxième direction opposée à la première direction vers la partie externe (10, 114, 214) lorsque la partie intermédiaire (14, 110, 210, 414) est sous l'action de l'au moins un organe d'actionnement électromagnétique (22, 222) ; le dispositif de freinage électromagnétique (5, 105, 205, 305, 405, 505) étant **caractérisé en ce qu'**il comporte en outre une pluralité de feuilles (16, 216, 316, 416, 516) magnétiques indépendantes les unes des autres et mobiles en translation entre la partie intermédiaire (14, 110, 210, 414) et la partie externe (10, 114, 214) lorsqu'elles sont sous l'action de l'au moins un organe d'actionnement mécanique (24, 26, 224, 226) et/ou sous l'action de l'au moins un organe d'actionnement électromagnétique (22, 222).

2. Dispositif de freinage électromagnétique selon la revendication 1, **caractérisé en ce que** la partie externe est formée par un corps (10) magnétique, respectivement une armature (114, 214) magnétique, et la partie intermédiaire est formée par une armature (14, 414) magnétique, respectivement un corps (110, 210) magnétique.

3. Dispositif de freinage électromagnétique selon la revendication 2, **caractérisé en ce que** l'au moins un organe d'actionnement électromagnétique (22, 222) et l'au moins un organe d'actionnement mécanique (24, 26, 224, 226) sont logés dans le corps (10, 110, 210) et les feuilles (16, 216, 316, 416, 516) sont situées contre l'armature (14, 114, 214, 414) sous l'action de l'au moins un organe d'actionnement mécanique (24, 26, 224, 226).

4. Dispositif de freinage selon l'une quelconque des revendications 1 à 3, **caractérisé en ce qu'**il est configuré pour que, dans une configuration de freinage, les feuilles (16, 216, 316, 416, 516) sont poussées par l'au moins un organe d'actionnement mécanique (24, 26, 224, 226) depuis la partie externe (10), respectivement la partie intermédiaire (110, 210), vers la partie intermédiaire (14, 414), respectivement la partie externe (114, 214), et dans une configuration de défreinage, les feuilles (16, 216, 316, 416, 516) sont au moins partiellement déplacées sous l'action de l'au moins un organe d'actionnement électromagnétique (22, 222) depuis la partie intermédiaire (14, 414), respectivement la partie externe (114, 214), vers la partie externe (10), respectivement la partie intermédiaire (110, 210), avec les feuilles (16, 216, 316, 416, 516) qui se déforment successivement sous l'action simultanée de l'au moins un organe d'actionnement mécanique (24, 26, 224, 226).

5. Dispositif de freinage selon l'une quelconque des revendications 1 à 4, **caractérisé en ce que** l'au moins un organe d'actionnement mécanique (24, 26, 224, 226) est configuré pour solliciter des zones périphériques interne et/ou externe (62, 64) des feuilles (16, 216, 316, 416, 516), tandis que l'organe d'actionnement électromagnétique (22, 222) est configuré pour générer un flux magnétique circulant dans les feuilles (16, 216, 316, 416, 516), le corps (10, 110, 210) et l'armature (14, 114, 214, 414).

6. Dispositif de freinage selon l'une quelconque des revendications 1 à 5, **caractérisé en ce que** le rapport entre une épaisseur (Ea) de la partie intermédiaire (14, 414), respectivement de la partie externe (114, 214), et une épaisseur (Eft) des feuilles (16, 216, 316, 416, 516) en appui les unes contre les autres est compris entre environ 0,2 et environ 30.

7. Dispositif de freinage l'une quelconque des revendications 1 à 6, **caractérisé en ce qu'**il comporte entre environ 2 et environ 30 feuilles (16, 216, 316, 416, 516).

8. Dispositif de freinage selon l'une quelconque des revendications 1 à 7, **caractérisé en ce que** chaque feuille (16, 216, 316, 416, 516) présente une épaisseur (Ef) comprise entre 0,3 mm et environ 5 mm et/ou chaque feuille (16, 216, 316, 416, 516) présente sensiblement la même épaisseur (Ef).

9. Dispositif de freinage selon l'une quelconque des revendications 1 à 8, **caractérisé en ce que** la partie externe (10) ou la partie intermédiaire (110, 210) présente une face interne (11, 211) et comporte au moins un trou borgne (23, 25, 223, 225) débouchant sur ladite face interne (11, 211), l'au moins un organe d'actionnement mécanique (24, 26, 224, 226) étant un ressort de compression partiellement logé dans ledit trou borgne (23, 25, 223, 225) et s'étendant en saillie depuis ladite face interne (11, 211) jusqu'à venir en contact avec une des feuilles (16, 216, 316, 416, 516) qui se trouve directement en regard de ladite face interne (11, 211).

10. Dispositif de freinage selon la revendication 9, **caractérisé en ce qu'**il comporte une pluralité de ressorts de compression (24, 26, 224, 226) répartis le long d'un bord périphérique externe (74) et/ou d'un bord périphérique interne (72) de ladite face interne (11).

11. Dispositif de freinage selon l'une quelconque des revendications 1 à 10, **caractérisé en ce que** la partie externe (10) ou la partie intermédiaire (110, 210) présente une face interne (11) et comporte un logement (21, 221) ménagé dans ladite face interne (11, 211), l'organe d'actionnement électromagnétique (22, 222) comportant une bobine électrique logée dans ledit logement (21, 221) et configurée pour générer un flux magnétique circulant dans lesdites feuilles (16, 216, 316, 416, 516) et dans ladite partie externe (10, 114, 214) et dans la partie intermédiaire (14, 110, 210, 414) lorsque ladite bobine électrique est alimentée en courant électrique.

12. Dispositif de freinage électromagnétique selon l'une quelconque des revendications 1 à 11, **caractérisé en ce qu'**il comporte au moins un organe de liaison (30, 230, 586) configuré pour maintenir une distance prédéterminée entre la partie externe (10, 214) et un support (6, 506) destiné à enserrer, avec la partie intermédiaire (14, 210, 414), le disque de friction (15), et **en ce que** chaque feuille (316, 416, 516) comporte une portion principale (381, 481, 581), une portion d'appui (382, 482, 582) et une portion de raccord (383, 483, 583) rattachant la portion d'appui (382, 482, 582) à la portion principale (381, 481, 581) de la feuille (316, 416, 516), l'organe de liaison (30, 230, 586) étant en appui contre la portion d'appui (382, 482, 582) d'une des feuilles (316, 416, 516), de sorte que les portions d'appui (382, 482, 582) de toutes les feuilles sont en appui les unes contre les autres et sont interposées et maintenues en contact entre l'organe de liaison (30, 230, 586) et la partie externe (10, 214), et chaque portion de raccord (383, 483, 583) étant configurée pour se déformer lorsque la portion principale (381, 481, 581) de la feuille (316, 416, 516) associée se déforme sous l'action de l'au moins un organe d'actionnement mécanique (24, 26, 224, 226) et/ou de l'au moins un organe d'actionnement électromagnétique (22, 222).

13. Dispositif de freinage électromagnétique selon la revendication 12, **caractérisé en ce que** chaque feuille (316, 416) comporte des portions d'appui (382, 482) distinctes et à distance l'une de l'autre, chaque portion d'appui (382, 482) étant ménagée en saillie externe de la portion principale (381, 481) ou dans la portion principale (381, 481), et l'au moins un organe de liaison (30, 230) est formé par une entretoise.

14. Dispositif de freinage électromagnétique selon la revendication 12, **caractérisé en ce que** chaque feuille comporte un organe d'appui (582) s'étendant autour de la portion principale (581) de la feuille (516) associée et formant la portion d'appui (582), le support (506) comportant un rebord d'appui (586) formant l'organe de liaison (583).

15. Système de mobilité, par exemple du type ascenseur ou chariot élévateur, comportant un dispositif de freinage électromagnétique selon l'une quelconque des revendications 1 à 14 et un arbre rotatif (7) qui est solidaire d'un disque de friction (15) du dispositif de freinage électromagnétique (5, 105, 205, 305, 405, 505), avec l'arbre rotatif (7) qui est bloqué en rotation lorsque la partie intermédiaire (14, 110, 210, 414) a été déplacée dans la première direction dite de freinage et qu'elle est en appui contre le disque de friction (15), et avec l'arbre rotatif (7) qui est libre en rotation lorsque la partie intermédiaire (14, 110, 210, 414) a été déplacée dans la deuxième direction opposée à la première direction et qu'elle est éloignée du disque de friction (15).

## Patentansprüche

1. Elektromagnetische Bremsvorrichtung, die so eingerichtet ist, dass sie eine Drehwelle (7) blockiert, umfassend eine Reibscheibe (15), die in Translation und Rotation beweglich montiert ist und so eingerichtet ist, dass sie mit der Drehwelle (7), einem äußeren Teil (10, 114, 214) und einem Zwischenteil (14, 110, 210, 414), das in Translation zwischen der Reibscheibe (15) und dem äußeren Teil (10, 114, 214) beweglich montiert ist, wobei mindestens eines der äußeren Teile (10, 114, 214) oder des Zwischenteile (14, 110, 210, 414) magnetisch ist, mindestens ein elektromagnetisches Betätigungselement (22, 222) und mindestens ein mechanisches Betätigungselement (24, 26, 224, 226), die im anderen des äußeren Teils (10, 114, 214) oder des Zwischenteils (14, 110, 210, 414) untergebracht sind, wobei das Zwischenteil (14, 110, 210, 414) so eingerichtet ist, dass es sich in einer ersten Bremsrichtung zur Reibscheibe (15) bewegt, wenn es unter der Wirkung des mindestens einen mechanischen Betätigungselements (24, 26, 224, 226) steht, und in einer zweiten Richtung entgegengesetzt der ersten Richtung zum äußeren Teil (10, 114, 214), wenn das Zwischenteil (14, 110, 210, 414) unter der Wirkung des mindestens einen elektromagnetischen Betätigungselements (22, 222) steht; wobei die elektromagnetische Bremsvorrichtung (5, 105, 205, 305, 405, 505) **dadurch gekennzeichnet ist, dass** sie ferner eine Vielzahl von voneinander unabhängigen magnetischen Folien (16, 216, 316, 416, 516) umfasst, die translatorisch zwischen dem Zwischenteil (14, 110, 210, 414) und dem äußeren Teil (10, 114, 214), wenn sie unter der Wirkung des mindestens einen mechanischen Betätigungselements (24, 26, 224, 226) und/oder unter der Wirkung des mindestens einen elektromagnetischen Betätigungselements (22, 222) stehen.

2. Elektromagnetische Bremsvorrichtung nach Anspruch 1, **dadurch gekennzeichnet, dass** das äußere Teil aus einem magnetischen Körper (10) beziehungsweise einem magnetischen Anker (114, 214) gebildet ist, und das Zwischenteil durch einen magnetischen Anker (14, 414) beziehungsweise einen magnetischen Körper (110, 210) gebildet ist.

3. Elektromagnetische Bremsvorrichtung nach Anspruch 2, **dadurch gekennzeichnet, dass** das mindestens eine elektromagnetische Betätigungselement (22, 222) und das mindestens eine mechanische Betätigungselement (24, 26, 224, 226) im Körper (10, 110, 210) und den Folien (16, 216, 316, 416, 516) gegen den Anker (14, 114, 214, 414) unter Einwirkung des mindestens einen mechanischen Betätigungselements (24, 26, 224, 226) untergebracht sind.

4. Bremsvorrichtung nach einem der Ansprüche 1 bis 3, **dadurch gekennzeichnet, dass** sie so eingerichtet ist, dass die Folien (16, 216, 316, 416, 516) in einer Bremseinrichtung durch das mindestens eine mechanische Betätigungselement (24, 26, 224, 226) vom äußeren Teil (10), beziehungsweise vom Zwischenteil (110, 210), zum Zwischenteil (14, 414), beziehungsweise zum äußeren Teil (114, 214), geschoben werden, und in einer Bremslöseeinrichtung, die Folien (16, 216, 316, 416, 516) unter der Wirkung des mindestens einen elektromagnetischen Betätigungselements (22, 222) zumindest teilweise von dem Zwischenteil (14, 414), beziehungsweise dem äußeren Teil (114, 214) verschoben werden, zum äußeren Teil (10), beziehungsweise zum Zwischenteil (110, 210), mit den Folien (16, 216, 316, 416, 516), die sich nacheinander unter der gleichzeitigen Wirkung des mindestens einen mechanischen Betätigungselements (24, 26, 224, 226) nacheinander verformen.

5. Bremsvorrichtung nach einem der Ansprüche 1 bis 4, **dadurch gekennzeichnet, dass** das mindestens eine mechanische Betätigungselement (24, 26, 224, 226) so eingerichtet ist, um innere und/oder äußere Umfangsbereiche (62, 64) der Folien (16, 216, 316, 416, 516) anzufordern, während das elektromagnetische Betätigungselement (22, 222) so eingerichtet ist, um einen magnetischen Fluss zu erzeugen, der in den Folien (16, 216, 316, 416, 516), dem Körper (10, 110, 210) und dem Anker (14, 114, 214, 414) zirkuliert.

6. Bremsvorrichtung nach einem der Ansprüche 1 bis 5, **dadurch gekennzeichnet, dass** das Verhältnis zwischen einer Dicke (Ea) des Zwischenteils (14, 414), beziehungsweise des äußeren Teils (114, 214) und einer Dicke (Eft) der Folien (16, 216, 316, 416, 516) gegeneinander anliegend zwischen etwa 0,2 und etwa 30 liegt.

7. Bremsvorrichtung nach einem der Ansprüche 1 bis 6, **dadurch gekennzeichnet, dass** sie zwischen etwa 2 und etwa 30 Folien (16, 216, 316, 416, 516) umfasst.

8. Bremsvorrichtung nach einem der Ansprüche 1 bis 7, **dadurch gekennzeichnet, dass** jede Folie (16, 216, 316, 416, 516) eine Dicke (Ef) zwischen 0,3 mm und etwa 5 mm aufweist und/oder jede Folie (16, 216, 316, 416, 516) im Wesentlichen die gleiche Dicke (Ef) aufweist.

9. Bremsvorrichtung nach einem der Ansprüche 1 bis 8, **dadurch gekennzeichnet, dass** das äußere Teil (10) oder das Zwischenteil (110, 210) eine Innenseite (11, 211) aufweist und mindestens ein Sackloch (23, 25, 223, 225), das auf die Innenseite (11, 211) mündet umfasst, wobei das mindestens eine mechanische Betätigungselement (24, 26, 224, 226) eine Druckfeder ist, die teilweise in dem Sackloch (23, 25, 223, 225) untergebracht ist und sich von der Innenseite (11, 211) aus vorspringend erstreckt, bis sie mit einer der Folien (16, 216, 316, 416, 516) in Kontakt kommt, die sich direkt gegenüber der Innenseite (11, 211) befindet.

10. Bremsvorrichtung nach Anspruch 9, **dadurch gekennzeichnet, dass** sie eine Vielzahl von Druckfedern (24, 26, 224, 226) umfasst, die entlang einer äußeren Umfangskante (74) und/oder einer inneren Umfangskante (72) der Innenseite (11) verteilt sind.

11. Bremsvorrichtung nach einem der Ansprüche 1 bis 10, **dadurch gekennzeichnet, dass** das äußere Teil (10) oder das Zwischenteil (110, 210) eine Innenfläche (11) aufweist und eine Aufnahme (21, 221) umfasst, die in der Innenfläche (11, 211) ausgebildet ist, wobei das elektromagnetische Betätigungselement (22, 222) eine elektrische Spule umfasst, die in der Aufnahme (21, 221) untergebracht und so eingerichtet ist, dass sie einen Magnetfluss erzeugt, der in den Folien (16, 216, 316, 416, 516) und in dem äußeren Teil (10, 114, 214) und in dem Zwischenteil (14, 110, 210, 414) zirkuliert, wenn die elektrische Spule mit elektrischem Strom versorgt wird.

12. Elektromagnetische Bremsvorrichtung nach einem der Ansprüche 1 bis 11, **dadurch gekennzeichnet, dass** sie mindestens ein Verbindungselement (30, 230, 586) umfasst, das so eingerichtet ist, dass es einen vorbestimmten Abstand zwischen dem äußeren Teil (10, 214) und einem Träger (6, 506) aufrechterhält, der dazu bestimmt ist, zusammen mit dem Zwischenteil (14, 210, 414) die Reibscheibe (15) zu halten, und dass jede Folie (316, 416, 516) einen Hauptabschnitt (381, 481, 581), einen Auflageabschnitt (382, 482, 582) und einen Verbindungsabschnitt (383, 483, 583) umfasst, der den Auflageabschnitt (382, 482, 582) mit dem Hauptabschnitt (381, 481, 581) der Folie (316, 416, 516) verbindet, wobei das Verbindungselement (30, 230, 586) gegen den Auflageabschnitt (382, 482, 582) einer der Folien (316, 416, 516) anliegt, so dass die Auflageabschnitte (382, 482, 582) aller Folien gegeneinander anliegen und zwischen dem Verbindungselement (30, 230, 586) und dem äußeren Teil (10, 214) angeordnet sind und in Kontakt gehalten werden, und jeder Verbindungsabschnitt (383, 483, 583) so eingerichtet ist, dass er sich verformt, wenn der Hauptabschnitt (381, 481, 581) der zugehörigen Folie (316, 416, 516) sich unter der Wirkung des mindestens einen mechanischen Betätigungselements (24, 26, 224, 226) und/oder des mindestens einen elektromagnetischen Betätigungselements (22, 222) verformt.

13. Elektromagnetische Bremsvorrichtung nach Anspruch 12, **dadurch gekennzeichnet, dass** jede Folie (316, 416) getrennte und voneinander entfernte Auflageabschnitte (382, 482) umfasst, wobei jeder Auflageabschnitt (382, 482) als äußerer Vorsprung des Hauptabschnitts (381, 481) oder im Hauptabschnitt (381, 481) vorgesehen ist, und das mindestens eine Verbindungselement (30, 230) durch einen Abstandshalter gebildet ist.

14. Elektromagnetische Bremsvorrichtung nach Anspruch 12, **dadurch gekennzeichnet, dass** jede Folie ein Auflageelement (582) umfasst, das sich um den Hauptabschnitt (581) der zugehörigen Folie (516) erstreckt und den Auflageabschnitt (582) bildet, wobei der Träger (506) einen Auflagerand (586) umfasst, der das Verbindungselement (583) bildet.

15. Mobilitätssystem, beispielsweise vom Typ Aufzug oder Gabelstapler, umfassend eine elektromagnetische Bremsvorrichtung nach einem der Ansprüche 1 bis 14 und eine Drehwelle (7), die fest mit einer Reibscheibe (15) der elektromagnetischen Bremsvorrichtung (5, 105, 205, 305, 405, 505) verbunden ist, wobei die Drehwelle (7) gegen Drehung blockiert ist, wenn das Zwischenteil (14, 110, 210, 414) in die erste Bremsrichtung bewegt worden ist und an der Reibscheibe (15) anliegt, und mit der Drehwelle (7), die frei drehbar ist, wenn das Zwischenteil (14, 110, 210, 414) in die zweite, zur ersten Richtung entgegengesetzte Richtung bewegt worden ist und von der Reibscheibe (15) entfernt ist.

## Claims

1. Electromagnetic braking device configured to block a rotary shaft (7), comprising a friction disc (15) which is mounted so as to be movable in translation and rotation and configured to be secured to the rotary shaft (7), an outer part (10, 114, 214) and an intermediate part (14, 110, 210, 414) which is mounted so as to be movable in translation between the friction disc (15) and the outer part (10, 114, 214), at least one of the outer part (10, 114, 214) or the intermediate part (14, 110, 210, 414) being magnetic, at least one electromagnetic actuating member (22, 222) and at least one mechanical actuating member (24, 26, 224, 226) which are housed in the other of the outer part (10, 114, 214) or the intermediate part (14, 110, 210, 414), the intermediate part (14, 110, 210, 414) being configured to move in a first direction , referred to as braking towards the friction disc (15), when it is under the action of the at least one mechanical actuating member (24, 26, 224, 226), and in a second direction opposite the first direction towards the outer part (10, 114, 214) when the intermediate part (14, 110, 210, 414) is under the action of the at least one electromagnetic actuating member (22, 222); the electromagnetic braking device (5, 105, 205, 305, 405, 505) being **characterised in that** it further comprises a plurality of magnetic sheets (16, 216, 316, 416, 516) which are independent of each other and movable in translation between the intermediate part (14, 110, 210, 414) and the outer part (10, 114, 214) when they are under the action of the at least one mechanical actuating member (24, 26, 224, 226) and/or under the action of the at least one electromagnetic actuating member (22, 222).

2. Electromagnetic braking device according to claim 1, **characterised in that** the outer part is formed by a magnetic body (10), respectively a magnetic armature (114, 214), and the intermediate part is formed by a magnetic armature (14, 414), respectively a magnetic body (110, 210).

3. Electromagnetic braking device according to claim 2, **characterised in that** the at least one electromagnetic actuating member (22, 222) and the at least one mechanical actuating member (24, 26, 224, 226) are housed in the body (10, 110, 210) and the sheets (16, 216, 316, 416, 516) are located against the armature (14, 114, 214, 414) under the action of the at least one mechanical actuating member (24, 26, 224, 226).

4. Braking device according to any one of claims 1 to 3, **characterised in that** it is configured so that, in a braking configuration, the sheets (16, 216, 316, 416, 516) are pushed by the at least one mechanical actuating member (24, 26, 224, 226) from the outer part (10), respectively the intermediate part (110, 210), towards the intermediate part (14, 414), respectively the outer part (114, 214), and in a brake release configuration, the sheets (16, 216, 316, 416, 516) are at least partially moved under the action of the at least one electromagnetic actuating member (22, 222) from the intermediate part (14, 414), respectively the outer part (114, 214), towards the outer part (10), respectively the intermediate part (110, 210), with the sheets (16, 216, 316, 416, 516) which are deformed successively under the simultaneous action of the at least one mechanical actuating member (24, 26, 224, 226).

5. Braking device according to any one of claims 1 to 4, **characterised in that** the at least one mechanical actuating member (24, 26, 224, 226) is configured to bias inner and/or outer peripheral zones (62, 64) of the sheets (16, 216, 316, 416, 516), while the electromagnetic actuating member (22, 222) is configured to generate a magnetic flux circulating in the sheets (16, 216, 316, 416, 516), the body (10, 110, 210) and the armature (14, 114, 214, 414).

6. Braking device according to any one of claims 1 to 5, **characterised in that** the ratio between a thickness (Ea) of the intermediate part (14, 414), respectively the outer part (114, 214), and a thickness (Eft) of the sheets (16, 216, 316, 416, 516) bearing against each other is between approximately 0.2 and approximately 30.

7. Braking device according to any one of claims 1 to 6, **characterised in that** it includes between approximately 2 and approximately 30 sheets (16, 216, 316, 416, 516).

8. Braking device according to any one of claims 1 to 7, **characterised in that** each sheet (16, 216, 316, 416, 516) has a thickness (Ef) between 0.3 mm and approximately 5 mm and/or each sheet (16, 216, 316, 416, 516) has substantially the same thickness (Ef).

9. Braking device according to any one of claims 1 to 8, **characterised in that** the outer part (10) or the intermediate part (110, 210) has an inner face (11, 211) and includes at least one blind hole (23, 25, 223, 225) opening onto said inner face (11, 211), the at least one mechanical actuating member (24, 26, 224, 226) being a compression spring which is partially housed in said blind hole (23, 25, 223, 225) and projects from said inner face (11, 211) until it comes into contact with one of the sheets (16, 216, 316, 416, 516) which is directly facing said inner face (11, 211).

10. Braking device according to claim 9, **characterised in that** it comprises a plurality of compression springs (24, 26, 224, 226) which are distributed along an outer peripheral edge (74) and/or an inner peripheral edge (72) of said inner face (11).

11. Braking device according to any one of claims 1 to 10, **characterised in that** the outer part (10) or the intermediate part (110, 210) has an inner face (11) and comprises a housing (21, 221) which is provided in said inner face (11, 211), the electromagnetic actuating member (22, 222) comprising an electric coil which is housed in said housing (21, 221) and configured to generate a magnetic flux circulating in said sheets (16, 216, 316, 416, 516) and in said outer part (10, 114, 214) and in the intermediate part (14, 110, 210, 414) when said electric coil is supplied with electrical current.

12. Electromagnetic braking device according to any one of claims 1 to 11, **characterised in that** it comprises at least one connecting member (30, 230, 586) configured to maintain a predetermined distance between the outer part (10, 214) and a support (6, 506) intended to clamp, together with the intermediate part (14, 210, 414), the friction disc (15), and **in that** each sheet (316, 416, 516) comprises a main portion (381, 481, 581), a bearing portion (382, 482, 582) and a coupling portion (383, 483, 583) attaching the bearing portion (382, 482, 582) to the main portion (381, 481, 581) of the sheet (316, 416, 516), the connecting member (30, 230, 586) bearing supported against the bearing portion (382, 482, 582) of one of the sheets (316, 416, 516), such that the bearing portions (382, 482, 582) of all the sheets are bearing against each other and are inserted and held in contact between the connecting member (30, 230, 586) and the outer part (10, 214), and each coupling portion (383, 483, 583) being configured to be deformed when the main portion (381, 481, 581) of the associated sheet (316, 416, 516) is deformed under the action of the at least one mechanical actuating member (24, 26, 224, 226) and/or the at least one electromagnetic actuating member (22, 222).

13. Electromagnetic braking device according to claim 12, **characterised in that** each sheet (316, 416) comprises bearing portions (382, 482) which are separate and at a distance from one another, each bearing portion (382, 482) being arranged in an external projection from the main portion (381, 481) or in the main portion (381, 481), and the at least one connecting member (30, 230) is formed by a spacer.

14. Electromagnetic braking device according to claim 12, **characterised in that** each sheet comprises a bearing member (582) extending around the main portion (581) of the associated sheet (516) and forming the bearing portion (582), the support (506) comprising a bearing edge (586) forming the connecting member (583).

15. Mobility system, for example of the elevator or forklift type, comprising an electromagnetic braking device according to any one of claims 1 to 14 and a rotary shaft (7) which is integral with a friction disc (15) of the electromagnetic braking device (5, 105, 205, 305, 405, 505), with the rotary shaft (7) which is blocked in rotation when the intermediate part (14, 110, 210, 414) has been moved in the first direction, referred to as the braking direction, and is bearing against the friction disc (15), and with the rotating shaft (7) which is free in rotation when the intermediate part (14, 110, 210, 414) has been moved in the second direction opposite to the first direction and is moved away from the friction disc (15).
